# EUROPÄISCHE PATENTSCHRIFT

(11) **EP 4 364 067 B1**
(45) Veröffentlichungstag und Bekanntmachung des Hinweises auf die Patenterteilung: **30.07.2025**
(21) Anmeldenummer: 22737709.0
(22) Anmeldetag: 28.06.2022
(51) Int. Cl.: G06Q 10/08

(54) **VERBESSERTES VERFAHREN ZUM BELADEN EINES ZIELLADEHILFSMITTELS UND LAGER- UND KOMMISSIONIERSYSTEM HIERFÜR**
IMPROVED METHOD FOR LOADING A TARGET LOADING AID, AND WAREHOUSE AND PICKING SYSTEM THEREFOR
PROCÉDÉ AMÉLIORÉ DE CHARGEMENT D'UN AUXILIAIRE DE CHARGEMENT CIBLE, ET ENTREPÔT ET SYSTÈME DE PRÉPARATION ASSOCIÉS

(30) Priorität: 30.06.2021 AT 505432021
(43) Veröffentlichungstag der Anmeldung: 08.05.2024
(73) Patentinhaber: TGW Logistics GmbH, 4614 Marchtrenk (AT)
(72) Erfinder: LINDLEY, Timothy, 58239 Schwerte (DE); KETTLGRUBER, Gerald, 4030 Linz (AT)
(74) Vertreter: Burger, Hannes
(86) Internationale Anmeldenummer: PCT/AT2022/060225
(87) Internationale Veröffentlichungsnummer: WO 2023/272323

(56) Entgegenhaltungen:
- SHIAU J Y ET AL: "A warehouse management system with sequential picking for multi-container deliveries", COMPUTERS & INDUSTRIAL ENGINEERING, PERGAMON, AMSTERDAM, NL, vol. 58, no. 3, 1 April 2010 (2010-04-01), pages 382 - 392, XP026979225, ISSN: 0360-8352, [retrieved on 20090505]
- STAN MIHAI ET AL: "Data- and model-driven digital twins for design and logistics control of product distribution", 2021 23RD INTERNATIONAL CONFERENCE ON CONTROL SYSTEMS AND COMPUTER SCIENCE (CSCS), IEEE, 26 May 2021 (2021-05-26), pages 33 - 40, XP033945863, DOI: 10.1109/CSCS52396.2021.00013

## Beschreibung

Die Erfindung betrifft ein Verfahren zum Beladen eines Zielladehilfsmittels mit Waren an einer Beladestation mit einer automatischen Beladevorrichtung. Weiterhin betrifft die Erfindung ein Lager- und Kommissioniersystem zur Durchführung des Verfahrens. Das Lager- und Kommissioniersystem umfasst einen Lagerbereich, eine Beladestation mit einer automatischen Beladevorrichtung, eine Quellfördertechnik sowie einen Auftragsrechner.

Ein solches Verfahren und ein solches Lager- und Kommissioniersystem sind aus dem Stand der Technik grundsätzlich bekannt. Problematisch ist generell, dass die Art der Beladung des Zielladehilfsmittels maßgeblich das Risiko einer Beschädigung der darin enthaltenen Waren beim Transport des Zielladehilfsmittels beeinflusst. Beispielsweise werden schwere Waren typischerweise weiter unten in einem Zielladehilfsmittel angeordnet, wohingegen leichte Waren eher weiter oben angeordnet werden. Bestellt ein Kunde schwere Konservendosen sowie leicht zerbrechliche Weingläser, so wird das Risiko für einen Bruch der Gläser reduziert, wenn diese wie angegeben oben im Zielladehilfsmittel angeordnet werden.

Durch die Vielzahl der unterschiedlichen Warentypen, die in einem modernen Lager- und Kommissioniersystem gehandhabt werden, führen einfache Beladevorschriften aber nicht zwingend zu einer vorteilhaften Art der Verpackung. Unter Umständen kann es zweckmäßig sein, die Ladereihenfolge bei bestimmten Warentypen umzukehren, etwa wenn der Kunde einen Polster und mehrere Gläser Marmelade bestellt. Die herkömmliche Vorgangsweise führt dazu, dass die Marmelade, da schwerer, unten im Zielladehilfsmittel angeordnet wird und der Polster oben. Dabei würde der Polster beim harten Aufsetzen des Zielladehilfsmittels auf eine Stellfläche den Stoß dämpfen und das Risiko für den Bruch der Gläser maßgeblich reduzieren.

Zudem führen die Leistungsanforderungen an moderne Lager- und Kommissioniersysteme zwangsläufig zu stetig steigenden Geschwindigkeiten und Beschleunigungen beim Manipulieren der Ware. Auch hier führen einfache Bewegungsvorschriften nicht immer zu einem optimalen Ziel. Beispielsweise ist die Gefahr für den Bruch eines Weinglases bei übermäßigen Beschleunigungen deutlich größer als etwa für den Bruch eines Marmeladeglases.

Ausgehend vom Stand der Technik bedarf es im Endergebnis einer differenzierten Vorgangsweise beim Beladen eines Zielladehilfsmittels.

SHIAU J Y ET AL "A warehouse management system with sequential picking for multi-container deliveries", COMPUTERS & INDUSTRIAL ENGINEERING, PERGAMON, AM-STERDAM, Bd. 58, Nr. 3, 1. April 2010, Seiten 382-392, ISSN: 0360-8352 offenbart ein Verfahren zum Beladen eines Zielladehilfsmittels mit Waren an einer manuellen Beladevorrichtung, umfassend die Schritte:
a) Erfassen eines Auftrags und Bestimmen von dem Auftrag zugeordneten Waren durch einen Auftragsrechner,
b) Bereitstellen von Wareneigenschaften in einer Datenbank,
c) Vorgeben von Beladeparametern, umfassend zumindest einen Parameter betreffend die Waren und/oder zumindest einen Parameter betreffend das Zielladehilfsmittel,
d) Erstellen eines Belademusters,
e) Wiederholen der Schritte b) bis d) mit veränderten Beladeparametern,
f) Erstellen einer Beladevorschrift für die Beladevorrichtung, umfassend die Beladeparameter, welche zum ausgewählten Belademuster führen, und
g) Antransportieren der Waren zur manuellen Beladevorrichtung und Beladen des Zielladehilfsmittels mit den Waren gemäß der Beladevorschrift durch eine Bedienperson.

Eine Aufgabe der Erfindung ist es, ein verbessertes Verfahren zum Beladen eines Zielladehilfsmittels sowie ein verbessertes Lager- und Kommissioniersystem zur Durchführung des Verfahrens anzugeben. Insbesondere soll eine differenzierte Vorgangsweise für die Beladung eines Zielladehilfsmittels angegeben werden.

Die Aufgabe der Erfindung wird mit einem Verfahren zum Beladen eines Zielladehilfsmittels mit Waren an einer Beladestation gemäß Anspruch 1 gelöst.

Insbesondere kann das Antransportieren der Waren zu der automatischen Beladevorrichtung der Beladestation, mit oder ohne Quellladehilfsmittel auf einer automatisierten Quellfördertechnik erfolgen.

Insbesondere kann das Beladen des Zielladehilfsmittels mit den Waren eine Abgabe einer Ware von der Beladevorrichtung und eine Übernahme der Ware auf bzw. in dem Zielladehilfsmittel, beispielsweise ein Behälter, Karton usw., umfassen. Das Beladen eines Zielladehilfsmittels kann das Beladen mit einer oder mehreren Waren umfassen.

Insbesondere kann eine Ware von ihrer Abgabe (an der Beladevorrichtung) bis zu ihrer Übernahme (auf einem Zielladehilfsmittel) alleine durch die Schwerkraft bewegt werden, beispielsweise durch Fallen, Gleiten und/oder Werfen. Lediglich wenn es zweckdienlich ist, kann die Ware auf ihrer Bewegung mit einer Kraftkomponente beaufschlagt werden (und "geworfen" werden), beispielweise um eine Bewegungsgeschwindigkeit zu erhöhen oder eine Ausrichtung der Ware zu verändern.

Insbesondere ist eine "Abgabe" von Waren von einer "Entnahme" von Waren zu unterscheiden. Bei der "Abgabe" von Waren ist eine Bewegung einer Ware entgegen der Gewichtskraft, daher ein Hochheben einer Ware, nicht vorgesehen, während bei der "Entnahme" eine Bewegung einer Ware entgegen der Gewichtskraft, daher ein Hochheben einer Ware, vorgesehen ist. Dies gilt insbesondere bei einer Abgabe der Waren durch Fallen oder Gleiten. Wird eine Ware geworfen, dann kann die Ware mit einer Kraft entgegen der Gewichtskraft beaufschlagt werden, um eine Wurfparabel zu verflachen oder um eine im ersten Abschnitt nach oben weisende Wurfparabel zu erreichen.

Weiterhin wird die Aufgabe der Erfindung durch ein Lager- und Kommissioniersystem gemäß Anspruch 14 gelöst.

Das Lager- und Kommissioniersystem ist insbesondere zur Durchführung des Verfahrens nach einem der Ansprüche 1 bis 13 ausgebildet.

Mit Hilfe des vorgestellten Verfahrens und des vorgestellten Lager- und Kommissioniersystems kann eine optimierte Beladung eines Zielladehilfsmittels erreicht werden. Dazu wird eine Zielvorgabe formuliert und der Beladevorgang vor dem realen Beladen des Zielladehilfsmittels simuliert, wobei zumindest die Beladeparameter variiert werden. Wird ein geeignetes Belademuster gefunden, also eines, das die Zielvorgabe, insbesondere optimal, erfüllt, so wird die Beladung des Zielladehilfsmittels real mit den aufgefundenen Beladeparametern ausgeführt.

Beispielsweise kann zum Beladen des Zielladehilfsmittels zumindest eine Ware der Waren durch Fallen, Gleiten und/oder Werfen in das Zielladehilfsmittel abgegeben werden. Dies ermöglicht besonders hohe Geschwindigkeiten beim Beladen des Zielladehilfsmittels. Damit einhergehend besteht jedoch eine gewisse Unsicherheit über das Ergebnis des Beladevorgangs, da dieser wegen des Fallens, Gleitens und/oder Werfens nicht streng deterministisch ist. Die Anwendung der vorgestellten Maßnahmen ist hier besonders vorteilhaft, da die genannte Unsicherheit durch die Vorabsimulation reduziert werden kann. Daher ist das Ergebnis des Beladevorgangs besser vorherseh- und einschätzbar.

Das "Belademuster" gibt insbesondere an, wie die Waren nach dem Beladevorgang im Zielladehilfsmittel liegen und insbesondere auch, ob alle vorgesehenen Waren im Zielladehilfsmittel liegen oder einige der Waren aus dem Zielladehilfsmittel ragen oder gar aus diesem herausgefallen sind. Mit anderen Worten entspricht das Belademuster einer Packordnung im Zielladehilfsmittel.

Vorzugsweise ist die Zielvorgabe aus einer Gruppe ausgewählt, umfassend einen Füllgrad des Zielladehilfsmittels, einen Zustand der Waren im Zielladehilfsmittel und/oder eine Pose der Waren im Zielladehilfsmittel. Der Füllgrad kann beispielsweise in Prozent des Volumens des Zielladehilfsmittels angegeben werden, welche durch die darin befindlichen Waren eingenommen wird. Insbesondere umfasst der Zustand der Waren im Zielladehilfsmittel eine (elastische und/oder plastische) zulässige Formveränderung der Ware, welche sie nach Erreichen eines Ruhezustands, insbesondere nach einem simulierten Fall oder Wurf, im Zielladehilfsmittel maximal aufweisen darf. Die Pose der Waren ist deren Position und Ausrichtung im Zielladehilfsmittel. Beispielsweise kann vorgesehen sein, dass Waren für den Kunden ansprechend im Zielladehilfsmittel angeordnet werden. Eine Ware, welche wie zuvor beschrieben aus dem Zielladehilfsmittel herausgefallen ist, würde beispielsweise auch keine Position im Zielladehilfsmittel aufweisen und demnach auch eine die Pose der Waren betreffende Zielvorgabe nicht erfüllen. Eine Zielvorgabe kann auch ein maximal tolerierbares Risiko für eine Beschädigung der Ware beim Beladevorgang und/oder auf dem weiteren Transportweg des Zielladehilfsmittels betreffen. Beispielsweise kann ein Beladevorgang mit leicht veränderten Beladeeigenschaften mehrmals simuliert werden und dabei jener Anteil der Simulationsdurchläufe bestimmt werden, bei dem eine Beschädigung der Ware auftritt.

Demgemäß ist es auch von Vorteil, wenn zum Erstellen des Belademusters
der Zustand der Waren durch die Simulationseinheit berechnet wird, welchen die Ware nach Erreichen eines Ruhezustands nach einem simulierten Beladen des Zielladehilfsmittels mit den Waren aufweisen,
der Füllgrad des Zielladehilfsmittels durch die Simulationseinheit berechnet wird, und/oder
die Pose der Waren im Zielladehilfsmittel durch die Simulationseinheit berechnet wird, welche die Waren nach Erreichen des Ruhezustands nach dem simulierten Beladen des Zielladehilfsmittels mit den Waren aufweisen.

Demgemäß ist es auch von Vorteil, wenn Schritt e) mit veränderten Beladeeigenschaften wiederholt wird. Dadurch kann berücksichtigt werden, dass Beladeeigenschaften unter Umständen nicht genau bestimmbar sind. Weiterhin kann die Verwendung alternativer Beladevorrichtungen beziehungsweise eine Beladung mit alternativen Waren im Schritt e) zu unterschiedlichen Eigenschaften der Beladevorrichtung und Wareneigenschaften der Waren führen.

Generell sind "Beladeeigenschaften" unveränderliche oder nicht kurzfristig veränderbare Fixgrößen, welche den Beladevorgang beeinflussen. Diese umfassen Eigenschaften der Beladevorrichtung und können beispielweise eine Geometrie der Beladevorrichtung, einen Reibwert einer Rutsche, usw. betreffen. Wareneigenschaften können beispielweise eine Geometrie einer Ware, ein Gewicht einer Ware, einen Reibwert einer Ware, usw. betreffen.

"Beladeparameter" sind (auch kurzfristig) veränderbare Größen, welche den Beladevorgang beeinflussen. Ein "Parameter betreffend die Beladevorrichtung" kann dabei beispielsweise eine Beladegeschwindigkeit, ein Auskippwinkel, eine Auskipphöhe, eine Beladeposition, etc. sein. Ein "Parameter betreffend die Waren" kann zum Beispiel eine Beladereihenfolge, eine Orientierung der Waren vor dem Beladen, usw. sein. Ein "Parameter betreffend das Zielladehilfsmittel" kann beispielsweise eine Form, eine Dimension oder eine Beschaffenheit des Zielladehilfsmittels sein. Der Auskippwinkel eines Quellladehilfsmittels kann zum Beispiel der Winkel beim Auskippen einer als Quellladehilfsmittel vorgesehenen Hängetasche sein. Der Auskippwinkel kann insbesondere als Winkel zwischen einem Boden des Quellladehilfsmittels und einer horizontalen Ebene angegeben werden.

Vorteilhaft ist es demgemäß auch, wenn
der zumindest eine Parameter betreffend die Beladevorrichtung ausgewählt ist aus einer Gruppe umfassend eine Bauart der Beladevorrichtung, eine Beladegeschwindigkeit, einen Auskippwinkel eines Quellladehilfsmittels, eine Fallhöhe der Ware in das Zielladehilfsmittel und/oder eine Beladeposition des Zielladehilfsmittels, und/oder
der zumindest eine Parameter betreffend die Waren ausgewählt ist aus einer Gruppe umfassend eine Auswahl von Waren eines Auftrags, eine Beladereihenfolge und/oder eine Pose der Ware bei einem Zuführen der Waren zum Zielladehilfsmittel, und/oder
der zumindest eine Parameter betreffend das Zielladehilfsmittel ausgewählt ist aus einer Gruppe umfassend eine Zielladehilfsmittel-Orientierung, Zielladehilfsmittel-Position, Zielladehilfsmittel-Form und/oder eine Zielladehilfsmittel-Dimensionierung.

Die Beladeeigenschaften und/oder Beladeparameter können datentechnisch erfasst werden und/oder elektronisch mit Sensoren erfasst werden. Beladeparameter können auch durch Soll- oder Stellgrößen für Aktoren gebildet sein. Beladeeigenschaften und/oder Beladeparameter können in einer Datenbank gespeichert sein, wobei nicht alle für die Simulation verwendeten Beladeeigenschaften und Beladeparameter zwingend in der Datenbank gespeichert sein müssen. Es ist insbesondere vorteilhaft, wenn einerseits einige der Beladeparameter, beispielsweise die Parameter betreffend die Beladevorrichtung, in der Datenbank hinterlegt sind (etwa mögliche Auskippwinkel, mögliche Auskipphöhen und dergleichen), andererseits einige der Beladeparameter, insbesondere die Beladereihenfolge, während des Prozesses generiert oder erfasst werden und vorzugsweise nicht bereits in der Datenbank hinterlegt sind. Insbesondere kann die Datenbank zur Bereitstellung von Beladeparametern eingerichtet sein, welche zumindest einen Parameter betreffend die Beladevorrichtung und/oder zumindest einen Parameter betreffend die Waren und/oder zumindest einen Parameter betreffend das Zielladehilfsmittel umfassen. Die Datenbank ist mit der Simulationseinheit datentechnisch verbunden, sodass die Simulationseinheit auf die elektronisch erfassten Beladeeigenschaften und/oder Beladeparameter zugreifen kann.

Wareneigenschaften betreffend die Waren können insbesondere von einem Lieferanten der Waren stammen und ebenfalls in der Datenbank gespeichert werden. Andererseits können die Wareneigenschaften auch erst im Lager- und Kommissioniersystem elektronisch mit Sensoren erfasst und in der Datenbank gespeichert werden. Da die Datenbank mit der Simulationseinheit datentechnisch verbunden ist, kann die Simulationseinheit auch auf die elektronisch erfassten Wareneigenschaften zugreifen.

Das Lager- und Kommissioniersystem umfasst generell eine oder mehrere der genannten Datenbanken, welche gegebenenfalls integraler Bestandteil der Simulationseinheit sein können.

An dieser Stelle wird angemerkt, dass mit der Nennung einer "Beladeeigenschaft" und eines "Beladeparameters" im Rahmen dieser Offenbarung sowohl eine Art beziehungsweise Bezeichnung dieser Beladeeigenschaft / dieses Beladeparameters als auch deren / dessen Wert gemeint sein kann. Beispielsweise besteht die Beladeeigenschaft für das Gewicht einer Ware aus deren Art oder Bezeichnung "Gewicht" und dessen Wert, z.B. "5 kg". Wird im Rahmen dieser Offenbarung auf eine Variation von Beladeeigenschaften oder von Beladeparametern Bezug genommen, dann kann dies eine Variation der Art und/oder eine Variation des Werts betreffen. Beispielsweise kann in eine Simulation die Beladeeigenschaft "Breite" einfließen, in eine andere Simulation die Beladeigenschaft "Gewicht". Desgleichen kann in eine Simulation der Wert für ein Gewicht "5 kg" einfließen, in eine andere Simulation der Wert "2 kg". Selbstverständlich ist auch eine kombinierte Änderung von Art und/oder Wert möglich. Beispielsweise kann in eine Simulation die Beladeeigenschaft "Breite" = "200 mm" einfließen, in eine andere Simulation die Beladeigenschaft "Gewicht" = "2 kg". Denkbar ist schließlich auch, eine Beladeeigenschaft und/oder einen Beladeparameter als Kombination von Art oder Bezeichnung und deren oder dessen Wert aufzufassen. Beispielsweise kann eine Beladeeigenschaft "Gewicht 5kg" sein und eine andere Beladeeigenschaft "Gewicht 2kg"

Von Vorteil ist es auch, wenn
im Schritt b) zusätzlich Toleranzbereiche für die Beladeeigenschaften, insbesondere für die Wareneigenschaften, in der Simulationseinheit bereitgestellt und Werte für die Beladeeigenschaften innerhalb der gegebenen Toleranzbereiche gewählt werden,
im Schritt d) das Simulieren für die gewählten Werte der Beladeeigenschaften durchgeführt wird, und
im Schritt e) Werte für die Beladeeigenschaften innerhalb der Toleranzbereiche geändert werden, und
die Zielvorgabe im Schritt f) eine Robustheit des Beladevorgangs gegenüber Variationen der Beladeeigenschaften umfasst.

Wie erwähnt, sind Beladeeigenschaften unter Umständen nicht genau bestimmbar. Vorteilhaft werden Beladeeigenschaften durch Variation innerhalb von Toleranzbereichen geändert, insbesondere zufällig. Dadurch kann die genannte Unsicherheit bei der Bestimmung von Beladeeigenschaften berücksichtigt werden. Die "Robustheit des Beladevorgangs" gibt an, wie stark das Ergebnis des Beladevorgangs, insbesondere das erstellte Belademuster, von streuenden Beladeeigenschaften abhängt.

Vorteilhaft ist es weiterhin, wenn
im Schritt c) zusätzlich Toleranzbereiche für die Beladeparameter in der Simulationseinheit bereitgestellt und Werte für die Beladeparameter innerhalb der gegebenen Toleranzbereiche gewählt werden,
im Schritt d) das Simulieren für die gewählten Werte der Beladeparameter durchgeführt wird, und
im Schritt e) Werte für die Beladeparameter innerhalb der Toleranzbereiche geändert werden, und
die Zielvorgabe im Schritt f) eine Robustheit des Beladevorgangs gegenüber Variationen der Beladeparameter umfasst.

Auch Beladeparameter sind unter Umständen nicht genau bestimmbar. Beispielsweise kann ein Stellantrieb für das Einstellen eines Auskippwinkels mit Toleranzen behaftet sein, wodurch auch der Beladevorgang diesbezüglich mit einer Unsicherheit behaftet wird. Vorteilhaft können auch Beladeparameter durch Variation innerhalb von Toleranzbereichen geändert werden, insbesondere wiederum zufällig. Dadurch kann die genannte Unsicherheit bei der Bestimmung von Beladeparametern berücksichtigt werden. Die "Robustheit des Beladevorgangs" gibt in diesem Fall an, wie stark das Ergebnis des Beladevorgangs von streuenden Beladeparametern abhängt.

Die Simulationseinheit kann ein "Simulationsmodul" und ein gesondertes "Analysemodul" umfassen. Das Analysemodul kann weiterhin eine Ausgabevorrichtung für die manuelle Analyse oder ein Analysemodul für die automatische Analyse aufweisen. Umfasst die Simulationseinheit ein Simulationsmodul und ein Analysemodul, resultiert insbesondere ein Lager- und Kommissioniersystem, umfassend
- einen Lagerbereich zur Bereitstellung von Waren,
- eine Beladestation mit einer automatischen Beladevorrichtung zum Beladen von Zielladehilfsmitteln mit Waren gemäß einer Beladevorschrift (wenn zumindest ein Belademuster eine Zielvorgabe erfüllt),
- eine Quellfördertechnik zum Transport der Waren, welche den Lagerbereich und die Beladestation verbindet,
- einen Auftragsrechner zum Erfassen eines Auftrags und zum Bestimmen von dem Auftrag zugeordneten Waren,
- zumindest eine Datenbank, in welcher Beladeeigenschaften, umfassend Eigenschaften der Beladevorrichtung und Wareneigenschaften der Waren, bereitstellbar sind, und
- eine Simulationseinheit, welche mit der zumindest einen Datenbank datentechnisch verbunden ist, und welche ein Simulationsmodul und ein Analysemodul aufweist, wobei die Simulationseinheit ausgebildet ist zum

Verarbeiten von, insbesondere elektronisch erfassten, Beladeeigenschaften, umfassend Eigenschaften der Beladevorrichtung und Wareneigenschaften der Waren durch das Simulationsmodul,

Verarbeiten einer Vorgabe von Beladeparametern, umfassend zumindest einen Parameter betreffend die Beladevorrichtung und/oder zumindest einen Parameter betreffend die Waren und/oder zumindest einen Parameter betreffend das Zielladehilfsmittel, durch das Simulationsmodul,

Simulieren eines Beladevorgangs des Zielladehilfsmittels mit Waren basierend auf den Beladeeigenschaften und den Beladeparametern durch das Simulationsmodul,
Erstellen eines Belademusters durch das Simulationsmodul,
Wiederholen der zuvor genannten Schritte mit veränderten Beladeparametern,
Analysieren erstellter Belademuster auf Basis der Zielvorgabe durch das Analysemodul,
Auswählen jenes Belademusters, welches die Zielvorgabe am besten erfüllt, und Erstellen der Beladevorschrift für die Beladevorrichtung, umfassend die Beladeparameter, welche zum ausgewählten Belademuster führen, durch das Analysemodul.

Die Waren können mit oder ohne Ladehilfsmittel im Lagerbereich bereitgestellt und mittels der Quellfördertechnik mit oder ohne Ladehilfsmittel zu der automatischen Beladevorrichtung der Beladestation antransportiert werden. Beispielsweise kann der Lagerbereich eine Vielzahl von ortsfest aufgestellten Lagerregalen und zumindest ein automatisiert betriebenes Regalbediengerät zum Einlagern der Waren in die Lagerregale und/oder Auslagern der Waren aus den Lagerregalen aufweisen. Hierbei können die Lagerregale zum hängenden und/oder liegenden Bereitstellen von Waren ausgebildet sein.

An der automatischen Beladevorrichtung können Zielladehilfsmittel mit Waren beladen werden.

Werden die Waren mit Ladehilfsmitteln antransportiert, so entsprechen diese "Quellladehilfsmitteln". Das Beladen eines Zielladehilfsmittels kann demgemäß auch ein Entladen des Quellladehilfsmittels umfassen. Hierbei kann das Beladen des Zielladehilfsmittels durch ein Umladen der Ware aus dem Quellladehilfsmittel in das Zielladehilfsmittel erfolgen. Ein Quellladehilfsmittel kann beispielsweise ein Behälter, ein Tablar, ein Karton oder auch eine Hängetasche sein. Die Waren können mit den Quellladehilfsmitteln in den Lagerregalen bereitgestellt sein.

Insbesondere kann eine Hängetasche gemäß der Patentanmeldung WO 2019/195871 A1 oder WO 2020/150762 A1 ausgebildet sein und in der dort beschriebenen Weise für das hier offenbarte Verfahren und das hier offenbarte Lager- und Kommissioniersystem verwendet werden. Nach dieser Ausführung erfolgt ein Beladen eines Zielladehilfsmittels durch ein Entladen einer Hängetasche (Quellladehilfsmittel). Ein Entladen der Hängetasche kann mit einer in der WO 2019/195871 A1 beschriebenen Entladestation erfolgen.

Insbesondere kann ein Behälter mit einer verschließbaren Bodenöffnung gemäß der Patentanmeldung WO 2012/024714 A2 ausgebildet sein und in der dort beschriebenen Weise für das hier offenbarte Verfahren und das hier offenbarte Lager- und Kommissioniersystem verwendet werden. Nach dieser Ausführung erfolgt ein Beladen eines Zielladehilfsmittels durch ein Entladen eines Behälters (Quellladehilfsmittel). Ein Entladen des Behälters kann mit einer in der WO 2012/024714 A2 beschriebenen Transferstation erfolgen.

Ein "Zielladehilfsmittel" kann zum Beispiel ein Behälter, ein Karton, eine Versandpackung (Versandkarton, Versandtasche), etc. sein.

Eine "automatisierte Quellfördertechnik" kann eine stationäre Fördertechnik und/oder eine mobile Fördertechnik umfassen. In gleicher Weise kann eine "automatisierte Zielfördertechnik" eine stationäre Fördertechnik und/oder eine mobile Fördertechnik umfassen. Eine "automatisierte Quellfördertechnik" kann weiterhin zum liegenden oder hängenden Transport der Waren ausgebildet sein. Analog dazu kann auch eine "automatisierte Zielfördertechnik" zum liegenden oder hängenden Transport der Waren ausgebildet sein.

Eine stationäre Fördertechnik zum liegenden Transport der Waren kann beispielsweise als bodengebundene Fördertechnik, beispielsweise als Rollenfördertechnik oder als Gurtfördertechnik ausgebildet sein.

Eine stationäre Fördertechnik zum hängenden Transport der Waren kann bevorzugt als Hängefördertechnik ausgebildet sein, welche Hängetaschen zur Aufnahme der Ware umfassen kann. Die Ware kann in diesem Fall an der Hängefördertechnik mittels einem Transportträger (z.B. mit einem Kleiderhaken) und insbesondere auch in einer Hängetasche transportiert werden. Bevorzugt wird genau eine Ware mit einem Transportträger oder in der Hängetasche transportiert. Es ist aber auch möglich, dass mit einem Transportträger oder mit der Hängetasche gleichzeitig mehr als eine Ware transportiert wird. Werden gleichzeitig mehrere Waren mit einem Transportträger oder einer Hängetasche transportiert, so handelt es sich vorwiegend um Waren derselben Warentype.

Eine mobile Fördertechnik kann beispielsweise ein automatisiertes Förderfahrzeug, zum Beispiel ein "Automated Guided Vehicle", kurz "AGV" oder einen "Autonomous Mobile Robot", kurz "AMR" umfassen. Eine mobile Fördertechnik zum hängenden Transport der Waren kann beispielsweise auch an automatisierten Förderfahrzeugen angeordnete Hängefördertechniken umfassen.

Das Beladen des Zielladehilfsmittels kann den Kommissioniervorgang bilden oder Teil eines Kommissioniervorgangs sein. Die Beladestation kann in diesem Zusammenhang auch als "Kommissionierstation" aufgefasst und als solche bezeichnet werden. Das Zielladehilfsmittel kann insbesondere auch die Rolle eines Versandladehilfsmittels übernehmen, das in weiterer Folge aus dem Lager- und Kommissioniersystem abtransportiert und zu einem Empfänger gebracht wird.

Weitere vorteilhafte Ausgestaltungen und Weiterbildungen der Erfindung ergeben sich aus den Unteransprüchen sowie aus der Beschreibung in Zusammenschau mit den Figuren.

Erfindungsgemäß umfasst das vorgestellte Verfahren zusätzlich den Schritt h2) Antransportieren der Waren zu einer weiteren Beladevorrichtung der Beladestation und Beladen des Zielladehilfsmittels mit den Waren durch ein Bedienorgan.

Dabei ist die weitere Beladevorrichtung eine manuelle Beladevorrichtung und das Bedienorgan eine Bedienperson. Dadurch können Waren, für die bei der Simulation des Beladevorgangs kein geeignetes Belademuster aufgefunden werden kann, auf besonders flexible Art und Weise gehandhabt werden.

Das Beurteilen im Schritt f) umfasst ein Überprüfen, ob zumindest eines der Belademuster die Zielvorgabe erfüllt, und es werden die Schritte g) und h1) durchgeführt, wenn zumindest eines der Belademuster die Zielvorgabe erfüllt, oder es wird der Schritt h2) unter Auslassung des Schrittes g) durchgeführt, wenn keines der Belademuster die Zielvorgabe erfüllt.

Dadurch können im Lager- und Kommissioniersystem auch Waren gehandhabt werden, für die bei der Simulation des Beladevorgangs kein geeignetes Belademuster aufgefunden werden kann.

Die Waren können mit oder ohne Ladehilfsmittel im Lagerbereich bereitgestellt und mittels der Quellfördertechnik mit oder ohne Ladehilfsmittel zu der weiteren Beladevorrichtung der Beladestation antransportiert werden.

An der manuellen Beladevorrichtung kann das Zielladehilfsmittel durch die Bedienperson mit Waren beladen werden. Wenn die Waren in Quellladehilfsmitteln antransportiert werden, kann das Beladen des Zielladehilfsmittels eine Entnahme der Waren aus Quellladehilfsmitteln und ein Ablegen der Waren in das Zielladehilfsmittel umfassen. Mit anderen Worten werden die Waren an der manuellen Beladevorrichtung durch die Bedienperson von Quellladehilfsmitteln in das Zielladehilfsmittel umgeladen.

Die manuelle Beladevorrichtung kann eine Ein- und/oder Ausgabevorrichtung umfassen. Bevorzugt weist die Ein- und/oder Ausgabevorrichtung ein Ausgabemittel zur Ausgabe von Beladeanweisungen auf, beispielsweise einen Bildschirm, an welchem die Bedienperson Beladeanweisungen zum Beladen des Zielladehilfsmittels erhält. Ferner kann die Ein- und/oder Ausgabevorrichtung ein Eingabemittel zur Eingabe eines Quittierbefehls aufweisen, beispielsweise eine Tastatur oder eine Taste, über welches die Bedienperson das erfolgte Beladen des Zielladehilfsmittels quittieren (bestätigen) kann. Das Eingabemittel und Ausgabemittel können beispielsweise durch ein Touch-Display bereitgestellt sein.

Vorteilhaft ist es auch, wenn der Schritt f) vor dem Schritt e) ausgeführt wird, wobei
das Beurteilen im Schritt f) ein Überprüfen umfasst, ob das erstellte Belademuster die Zielvorgabe erfüllt, und
nach dem Schritt f) der Schritt e) durchgeführt wird, wenn das ermittelte Belademuster die Zielvorgabe nicht erfüllt, oder
nach Schritt f) unter Auslassung des Schrittes e) der Schritt g) durchgeführt wird, wenn das ermittelte Belademuster die Zielvorgabe erfüllt.

Bei dieser Ausführungsvariante wird kein weiterer Durchlauf einer Simulation durchgeführt, sobald ein Belademuster die Zielvorgabe erfüllt. Dadurch führt diese Ausführungsvariante besonders schnell zu einem Ergebnis.

Vorteilhaft ist es zudem, wenn eine Analysemenge definiert wird, welche eine beliebige Anzahl an Aufträgen umfasst, wobei die Schritte a) bis g) für alle Aufträge der Analysemenge durchgeführt werden, und wobei das Verfahren zwischen den Schritten f) und g) folgende Schritte umfasst:
i) Erstellen einer ersten Auftragsmenge, welche sämtliche Aufträge umfasst, für welche zumindest ein Belademuster erstellt wurde, das die Zielvorgabe erfüllt,
ii) Erstellen einer zweiten Auftragsmenge, welche sämtliche Aufträge umfasst, für welche kein Belademuster erstellt wurde, das die Zielvorgabe erfüllt.

Auf diese Weise kann eine Vielzahl von Aufträgen im Voraus simuliert werden, wobei die Aufträge nachfolgend in automatisch bearbeitbare Aufträge (erste Auftragsmenge) und nicht automatisch bearbeitbare Aufträge (zweite Auftragsmenge) eingeteilt und entsprechend weiterverarbeitet werden. Die zweite Auftragsmenge wird dabei insbesondere von einem Bedienorgan, im Speziellen von einer Bedienperson erledigt.

Günstig ist es, wenn das Beladen des Zielladehilfsmittels mit den Waren im Schritt h1) durch eine Kamera erfasst wird und in der Simulationseinheit ein Modell für die Simulation des Beladens adaptiv entsprechend der Erfassung des Beladens durch die Kamera an ein reales Beladen angepasst wird. Insbesondere ist es von Vorteil, wenn die Beladeeigenschaften und/oder die Beladeparameter entsprechend der Erfassung angepasst werden. Dadurch können falsche Annahmen betreffend das Modell für die Simulation des Beladens und insbesondere falsche Annahmen betreffend die Beladeeigenschaften und/oder die Beladeparameter korrigiert und an die Realität angepasst werden. Die Simulation nähert sich im Lauf der Zeit so immer mehr den realen Gegebenheiten an.

Vorteilhaft ist es auch, wenn das Beladen des Zielladehilfsmittels mit Hilfe virtueller Zwillinge der Beladevorrichtung, des Zielladehilfsmittels und/oder der Waren virtualisiert wird und die Beladeeigenschaften und/oder die Beladeparameter der virtuellen Beladevorrichtung, des virtuellen Zielladehilfsmittels und/oder der virtuellen Waren entsprechend der Erfassung des Beladens durch die Kamera angepasst werden. Virtuelle Zwillinge eignen sich besonders gut dafür, Simulationen umzusetzen beziehungsweise auch zu beobachten und auszuwerten. Dabei kann ein Mensch oder auch eine Künstliche Intelligenz helfen, in möglichst wenigen Simulationsdurchläufen ein optimiertes Ergebnis, das heißt eine optimierte Erfüllung der Zielvorgabe, zu erreichen.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer ersten beispielhaften Beladestation in einem Lager- und Kommissioniersystem;
- Fig. 2: eine schematische Darstellung einer zweiten beispielhaften Beladestation in einem Lager- und Kommissioniersystem;
- Fig. 3: eine schematische Darstellung einer weiteren beispielhaften Beladestation mit einer automatischen Beladevorrichtung und einer weiteren Beladevorrichtung;
- Fig. 4: ein Ablaufdiagramm, welches die zentralen Schritte des vorgestellten Verfahrens betrifft;
- Fig. 5: ein Ablaufdiagramm für eine Ausführungsvariante, bei der ein Teil der Waren automatisch und ein anderer Teil der Waren manuell in das Zielladehilfsmittel geladen wird; und
- Fig. 6: ein Ablaufdiagramm für eine Ausführungsvariante eines verkürzten Simulationsverfahren, das beim ersten Erfüllen einer Zielvorgabe abgebrochen wird.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

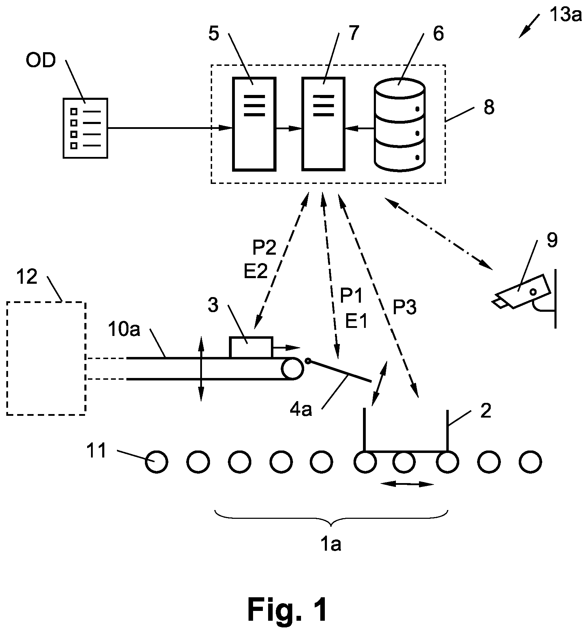

Die Fig. 1 zeigt ein erstes Beispiel einer Beladestation 1a zum Beladen von Zielladehilfsmitteln 2 mit Waren 3 gemäß einer Beladevorschrift. Die Beladestation 1a umfasst dazu eine automatische Beladevorrichtung 4a, welche in diesem Beispiel als Rutsche ausgebildet ist, deren Neigung einstellbar ist, so wie das in der Fig. 1 mit einem Pfeil symbolisiert ist. Ein Zielladehilfsmittel 2 kann zum Beispiel ein Behälter, ein Karton, eine Versandpackung (Versandkarton, Versandtasche), etc. sein.

Zudem ist in der Fig. 1 ein Auftragsrechner 5, eine Datenbank 6 und eine Simulationseinheit 7 dargestellt, welche gemeinsam ein Computersystem 8 bilden oder Teil eines solchen sind. Der Auftragsrechner 5 ist zum Erfassen eines Auftrags OD und zum Bestimmen von dem Auftrag OD zugeordneten Waren 3 eingerichtet. In der Datenbank 6 werden Beladeeigenschaften bereitgestellt, und die Simulationseinheit 7 dient der Simulation eines Beladevorgangs des Zielladehilfsmittels 2 mit der Ware 3. Die Simulationseinheit 7 kann dazu ein Simulationsmodul und ein gesondertes Analysemodul umfassen. Das Analysemodul kann weiterhin eine Ausgabevorrichtung für die manuelle Analyse oder ein Analysemodul für die automatische Analyse aufweisen. Weiterhin kann die Simulationseinheit 7 die Datenbank 6 umfassen.

Darüber hinaus ist in der Fig. 1 auch eine optionale Kamera 9 zur Erfassung des realen Beladevorgangs des Zielladehilfsmittels 2 mit der Ware 3 dargestellt, welche mit dem Computersystem 8 und insbesondere mit der Simulationseinheit 7 verbunden ist.

Weiterhin ist in der Fig. 1 eine Quellfördertechnik 10a und eine Zielfördertechnik 11 dargestellt. Die Quellfördertechnik 10a ist dabei mit einem optionalen Lagerbereich 12 verbunden. Die Quellfördertechnik 10a ist zum Transport der Waren 3 vom Lagerbereich 12 zur Beladestation 1a vorgesehen, und die Zielfördertechnik 11 ist zum Antransport des Zielladehilfsmittels 2 zur Beladestation 1a und zum Abtransport des Zielladehilfsmittels 2 von der Beladestation 1a ausgebildet.

Die in der Fig. 1 dargestellten Gegenstände sind Teil eines Lager- und Kommissioniersystems 13a oder bilden dieses.

In dem in Fig. 1 dargestellten Beispiel ist die Quellfördertechnik 10a und die Zielfördertechnik 11 als stationäre Fördertechnik ausgebildet. Konkret umfasst die Quellfördertechnik 10a ein beispielhaftes Förderband und die Zielfördertechnik 11 einen beispielhaften Rollenförderer. Andere Ausführungsformen sind aber gleichermaßen möglich. Denkbar wäre weiterhin, dass die Quellfördertechnik 10a und/oder die Zielfördertechnik 11 als mobile Fördertechnik ausgebildet ist. Beispielsweise kann eine solche "Automated guided vehicles" (kurz: AGV) oder "Autonomous mobile robots" (kurz: AMR) aufweisen.

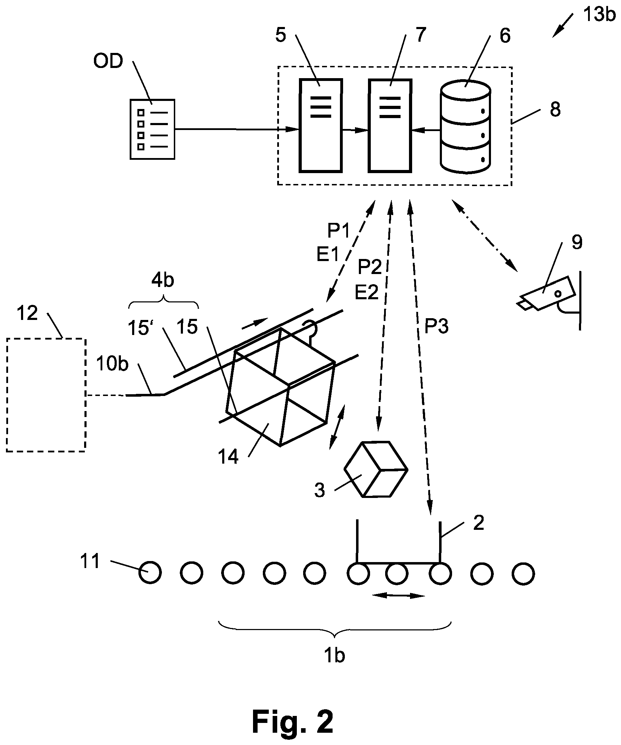

Weiterhin sind die Quellfördertechnik 10a und die Zielfördertechnik 11 zum liegenden Transport der Waren 3 ausgebildet. Konkret wird die Ware 3 auf der Quellfördertechnik 10a ohne ein Ladehilfsmittel transportiert, wohingegen die Ware 3 auf der Zielfördertechnik 11 mit Hilfe des Zielladehilfsmittels 2 transportiert wird. Denkbar wäre aber auch, dass die Ware 3 auf der Quellfördertechnik 10a mit einem Quellladehilfsmittel transportiert wird (vergleiche auch Fig. 2). Ein Quellladehilfsmittel kann allgemein auch ein Behälter, ein Tablar oder ein Karton sein. Ein Quellladehilfsmittel kann zum Abgeben einer Ware 3 auch mit einer verschließbaren Bodenöffnung gemäß der Patentanmeldung WO 2012/024714 A2 ausgebildet sein und in der dort beschriebenen Weise für das hier offenbarte Verfahren und das hier offenbarte Lager- und Kommissioniersystem 13a verwendet werden.

Der Lagerbereich 12 kann eine Vielzahl von ortsfest aufgestellten Lagerregalen und zumindest ein automatisiert betriebenes Regalbediengerät zum Einlagern der Waren 3 in die Lagerregale und/oder Auslagern der Waren 3 aus den Lagerregalen aufweisen. Ein solches Lagerregal und ein solches Regalbediengerät sind aus dem Stand der Technik grundsätzlich bekannt und werden daher hier nicht im Detail erläutert.

Die Quellfördertechnik 10a ist in diesem Beispiel höhenverstellbar ausgeführt und kann auch hinsichtlich der Fördergeschwindigkeit verstellbar ausgeführt sein (siehe die Pfeile in der Fig. 1). Insofern wird der Beladevorgang auch durch die Quellfördertechnik 10a beeinflusst. Folgerichtig kann die Quellfördertechnik 10a in diesem Fall, das heißt allgemein, wenn sie den Beladevorgang beeinflusst, als Teil der Beladestation 1a beziehungsweise als Teil der Beladevorrichtung 4a aufgefasst werden.

In dem im Fig. 1 dargestellten Beispiel wird die Ware 3 durch Gleiten und Fallen in das Zielladehilfsmittel 2 abgegeben. Dies ist nicht die einzig vorstellbare Möglichkeit. Denkbar wäre vielmehr auch, dass die Rutsche 4a bis zum Boden des Zielladehilfsmittels 2 reicht und die Ware 3 daher nicht in das Zielladehilfsmittel 2 fällt, sondern nur gleitet beziehungsweise rutscht. Denkbar wäre auch, dass die Ware 3 in das Zielladehilfsmittel 2 geworfen oder gelegt wird, etwa mit Hilfe eines Knickarmroboters oder Portalroboters. Auch wäre es möglich, die Rutsche 4a wegzulassen, und die Ware 3 direkt von der Quellfördertechnik 10a in das Zielladehilfsmittel 2 abzugeben.

Fig. 2 zeigt eine alternative beispielhafte Ausführungsform einer Beladestation 1b beziehungsweise eines Lager- und Kommissioniersystems 13b, welche der in der Fig. 1 dargestellten Beladestation 1a beziehungsweise dem in der Fig. 1 dargestellten Lager- und Kommissioniersystem 13a sehr ähnlich ist. Im Unterschied dazu ist die Quellfördertechnik 10b in diesem Beispiel als Hängefördertechnik ausgebildet und für den hängenden Transport der Waren 3 in Quellladehilfsmitteln 14 vorgesehen, die als Hängetaschen ausgebildet sind. Die Hängetasche 14 wird auf einem Transportträger der Quellfördertechnik 10b vom Lagerbereich 12 zur Beladestation 1b transportiert und dort mit Hilfe der Führungsbahnen 15, 15' automatisch geöffnet und, insbesondere in einen Auskippwinkel, geneigt. Die Führungsbahn 15 wirkt dabei auf den vorderen Teil der Hängetasche 14 und drückt diesen nach unten, wohingegen die Führungsbahn 15' auf den hinteren Teil der Hängetasche 14 wirkt und diesen nach oben drückt. Demgemäß bilden die Führungsbahnen 15, 15' in diesem Beispiel die Beladevorrichtung 4b beziehungsweise sind Teil derselben. Um den Vorgang beim Öffnen und Neigen der Hängetasche 14 besser zu illustrieren, ist die Hängetasche 14, die Quellfördertechnik 10b, die Beladevorrichtung 4b sowie die Ware 3 im Bereich der Beladestation 1b in Schrägansicht dargestellt. Hierbei ist die Hängetasche 14 in einer Auskippstellung, in welcher die Ware 3 automatisch in das Zielladehilfsmittel 2 abgegeben werden kann, dargestellt, wobei die Hängetasche 14 im Auskippwinkel geneigt ist.

Auch bei dem in Fig. 2 dargestellten Beispiel wird die Ware 3 durch Gleiten und Fallen in das Zielladehilfsmittel 2 abgegeben. Denkbar wäre aber beispielsweise auch, dass die Ware 3 von der Hängetasche 14 auf eine Rutsche (vergleiche Fig. 1) abgegeben wird, die bis zum Boden des Zielladehilfsmittels 2 führt. Denkbar wäre generell auch eine Abgabe der Ware 3 in das Zielladehilfsmittel 2 mit Hilfe eines Roboters mit einem (Saug)greifer, welcher die Ware 3 von der Quellfördertechnik 10b entnimmt und diese im Zielladehilfsmittel 2 ablegt.

Insbesondere kann eine Hängetasche 14 gemäß der Patentanmeldung WO 2019/195871 A1 oder WO 2020/150762 A1 ausgebildet sein und in der dort beschriebenen Weise für das hier offenbarte Verfahren und das hier offenbarte Lager- und Kommissioniersystem 13b verwendet werden. Ein Entladen der Hängetasche 14 kann mit einer in der WO 2019/195871 A1 beschriebenen Entladestation erfolgen, die ähnlich aufgebaut ist wie die schematisch dargestellte Beladevorrichtung 4b der Fig. 2.

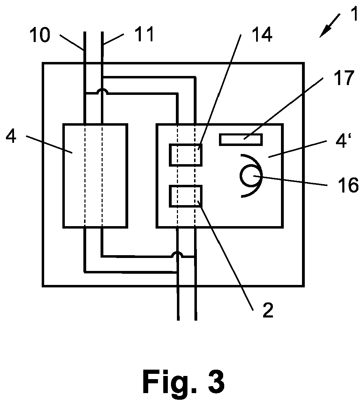

Wie in Fig. 3 dargestellt, kann eine Beladestation 1 zusätzlich zur (automatischen) Beladevorrichtung 4 eine weitere Beladevorrichtung 4' aufweisen, welche zum manuellen Beladen der Zielladehilfsmittel 2 durch eine Bedienperson 16, also als manuelle Beladevorrichtung 4', ausgebildet ist.

An der weiteren Beladevorrichtung 4' kann somit das Zielladehilfsmittel 2 durch die Bedienperson 16 mit Waren 3 beladen werden. Wenn die Waren 3 in Quellladehilfsmitteln 14 antransportiert werden, können die Waren 3 an der weiteren (manuellen) Beladevorrichtung 4' durch die Bedienperson 16 von den Quellladehilfsmitteln 14 in das Zielladehilfsmittel 2 umgeladen werden, so wie das in der Fig. 3 dargestellt ist.

Die weitere Beladevorrichtung 4' kann eine Ein- und/oder Ausgabevorrichtung 17 umfassen. Bevorzugt weist die Ein- und/oder Ausgabevorrichtung 17 ein Ausgabemittel zur Ausgabe von Beladeanweisungen auf, an welchem die Bedienperson 16 Beladeanweisungen zum Beladen des Zielladehilfsmittels 14 erhält. Ferner kann die Ein- und/oder Ausgabevorrichtung 17 ein Eingabemittel zur Eingabe eines Quittierbefehls aufweisen, beispielsweise eine Tastatur oder eine Taste, über welches die Bedienperson 16 das erfolgte Beladen des Zielladehilfsmittels 14 quittieren (bestätigen) kann.

Die Quellfördertechnik 10 und die Zielfördertechnik 11 können wie im Zusammenhang mit Fig. 1 und Fig. 2 beschrieben ausgebildet und sowohl mit der Beladevorrichtung 4 als auch mit der weiteren Beladevorrichtung 4' fördertechnisch verbunden sein, so wie das in der Fig. 3 dargestellt ist.

Die Beladestation 1, 1a, 1b kann insbesondere für das Kommissionieren von Waren 3 eingesetzt werden. Demgemäß kann die Beladestation 1, 1a, 1b in diesem Fall auch als "Kommissionierstation" bezeichnet werden.

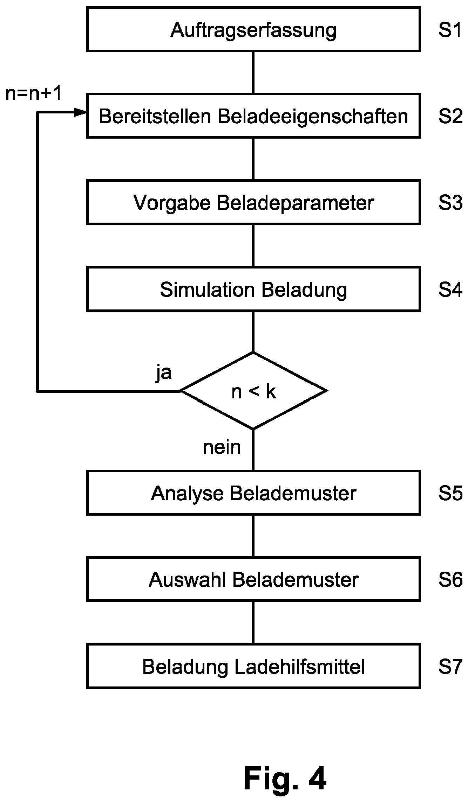

Der Ablauf des vorgestellten Verfahrens zum Beladen eines Zielladehilfsmittels 2 im Allgemeinen ist nun wie folgt, wobei das Verfahren anhand der in den Fig. 1 und 2 dargestellten Anordnungen sowie anhand des in der Fig. 4 dargestellten Ablaufdiagramms beispielhaft erläutert wird.

Das vorgestellte Verfahren umfasst die folgenden Schritte:
a) Erfassen S1 eines Auftrags OD und Bestimmen von dem Auftrag OD zugeordneten Waren 3 durch den Auftragsrechner 5,
b) Bereitstellen S2 von, insbesondere elektronisch erfassten, Beladeeigenschaften, umfassend Eigenschaften E1 der Beladevorrichtung 4, 4a, 4b und Wareneigenschaften E2 der Waren 3, in der Datenbank 6 für die Simulationseinheit 7,
c) Vorgeben S3 von Beladeparametern, umfassend zumindest einen Parameter P1 betreffend die Beladevorrichtung 4, 4a, 4b und/oder zumindest einen Parameter P2 betreffend die Waren 3 und/oder zumindest einen Parameter P3 betreffend das Zielladehilfsmittel 2, in der Simulationseinheit 7,
d) Simulieren S4 eines Beladevorgangs des Zielladehilfsmittels 2 mit Waren 3 mit Hilfe der Simulationseinheit 7 basierend auf den Beladeeigenschaften E1, E2 und den Beladeparametern P1..P3 und Erstellen eines Belademusters durch die Simulationseinheit 7,
e) Wiederholen der Schritte b) bis d) mit veränderten Beladeparametern P1..P3,
f) Analysieren S5 der erstellten Belademuster auf Basis einer Zielvorgabe mittels der Simulationseinheit 7,
g) Auswählen S6 jenes Belademusters, welches die Zielvorgabe am besten erfüllt, und Erstellen einer Beladevorschrift für die Beladevorrichtung 4, 4a, 4b, umfassend die Beladeparameter P1..P3, welche zum ausgewählten Belademuster führen, mittels der Simulationseinheit 7,
h1) Antransportieren S7 der Waren 3, insbesondere durch eine automatisierte Quellfördertechnik 10, 10a, 10b, zu der automatischen Beladevorrichtung 4, 4a, 4b der Beladestation 1, 1a, 1b und Beladen des Zielladehilfsmittels 2 mit den Waren 3 durch die automatische Beladevorrichtung 4, 4a, 4b gemäß der Beladevorschrift, wenn zumindest eines der Belademuster die Zielvorgabe erfüllt. Beispielsweise kann
der zumindest eine Parameter P1 betreffend die Beladevorrichtung 4, 4a, 4b ausgewählt sein aus einer Gruppe umfassend eine Bauart der Beladevorrichtung 4, 4a, 4b, eine Beladegeschwindigkeit, einen Auskippwinkel eines Quellladehilfsmittels 14, eine Fallhöhe der Ware 3 in das Zielladehilfsmittel 2 und/oder eine Beladeposition des Zielladehilfsmittels 2, und/oder
der zumindest eine Parameter P2 betreffend die Waren 3 ausgewählt sein aus einer Gruppe umfassend eine Auswahl von Waren 3 eines Auftrags OD, eine Beladereihenfolge und/oder eine Pose der Ware 3 bei einem Zuführen der Waren 3 zum Zielladehilfsmittel 2, und/oder
der zumindest eine Parameter P3 betreffend das Zielladehilfsmittel 2 ausgewählt sein aus einer Gruppe umfassend eine Zielladehilfsmittel-Orientierung, Zielladehilfsmittel-Position, Zielladehilfsmittel-Form und/oder eine Zielladehilfsmittel-Dimensionierung.

Zum Erstellen des Belademusters kann durch die Simulationseinheit 7 beispielsweise berechnet werden:
der Zustand der Waren 3, welchen die Ware 3 nach Erreichen eines Ruhezustands nach einem simulierten Beladen des Zielladehilfsmittels 2 mit den Waren 3 aufweisen,
der Füllgrad des Zielladehilfsmittels 2, und/oder
die Pose der Waren 3 im Zielladehilfsmittel 2, welche die Waren 3 nach Erreichen des Ruhezustands nach dem simulierten Beladen des Zielladehilfsmittels 2 mit den Waren 3 aufweisen.

Insbesondere umfasst der Zustand der Waren 3 im Zielladehilfsmittel 2 eine (elastische und/oder plastische) Formveränderung der Ware 3, welche sie nach Erreichen eines Ruhezustands (insbesondere nach einem simulierten Fall oder Wurf) im Zielladehilfsmittel 2 aufweisen. Das Belademuster gibt insbesondere auch an, wie die Waren 3 nach dem Beladevorgang im Zielladehilfsmittel 2 liegen und insbesondere auch, ob alle vorgesehenen Waren 3 im Zielladehilfsmittel 2 liegen oder einige der Waren 3 aus dem Zielladehilfsmittel 2 ragen oder gar aus diesem herausgefallen sind. Mit anderen Worten entspricht das Belademuster einer Packordnung im Zielladehilfsmittel 2.

Aus der Vielzahl der bei mehreren Simulationsdurchläufen erhaltenen Belademustern wird jenes ausgewählt, das eine Zielvorgabe am besten erfüllt. In Folge wird eine entsprechende Beladevorschrift erstellt, die als Basis für den realen Beladevorgang des Zielladehilfsmittels 2 dient.

Vorzugsweise ist die Zielvorgabe aus einer Gruppe ausgewählt, welche einen Füllgrad des Zielladehilfsmittels 2, einen Zustand der Waren 3 im Zielladehilfsmittel 2 und/oder eine Pose der Waren 3 im Zielladehilfsmittel 2 umfasst. Insbesondere kann die Zielvorgabe auch eine zulässige (elastische und/oder plastische) Formveränderung der Ware 3 betreffen, welche sie nach Erreichen eines Ruhezustands (insbesondere nach einem simulierten Fall oder Wurf) im Zielladehilfsmittel 2 maximal aufweisen darf. Der Füllgrad kann beispielsweise in Prozent des Volumens des Zielladehilfsmittels 2 angegeben werden, welche durch die darin befindlichen Waren 3 eingenommen wird. Die Pose der Waren 3 ist deren Position und Ausrichtung im Zielladehilfsmittel 2. Beispielsweise kann vorgesehen sein, dass Waren 3 für den Kunden ansprechend im Zielladehilfsmittel 2 angeordnet werden. Eine Zielvorgabe kann auch ein maximal tolerierbares Risiko für eine Beschädigung der Ware 3 beim Beladevorgang und/oder auf dem weiteren Transportweg des Zielladehilfsmittels 2 betreffen. Beispielsweise kann ein Beladevorgang mit leicht veränderten Beladeeigenschaften E1, E2 mehrmals simuliert werden und dabei jener Anteil der Simulationsdurchläufe bestimmt werden, bei dem eine Beschädigung der Ware 3 auftritt.

Die Beladeeigenschaften E1, E2 und/oder Beladeparameter P1..P3 können in der Datenbank 6 gespeichert sein und dort von der Simulationseinheit 7 ausgelesen werden. Die Beladeeigenschaften E1, E2 und/oder Beladeparameter P1..P3 können aber auch datentechnisch und/oder elektronisch mit Sensoren erfasst werden. Beispielsweise könnten die Abmessungen des Zielladehilfsmittels 2 mit einem Sensor erfasst werden. Diese brauchen dann nicht in der Datenbank 6 gespeichert sein. Denkbar ist auch, dass die Beladeeigenschaften E1, E2 und/oder Beladeparameter P1..P3 durch Auslesen einer Identifikationsmarke, wie beispielsweise eines RFID-Tags, eines Strichcodes, eines zweidimensionalen Codes, wie etwa eines Quick-Response-Codes, oder dergleichen ermittelt werden, welche auf der Ware 3, dem Zielladehilfsmittel 2 oder dem Quellladehilfsmittel 14 angeordnet ist. Beladeparameter P1, P3 können auch durch Stell- oder Sollgrößen für Aktoren gebildet sein, beispielsweise durch eine Stell- oder Sollgröße für den Stellantrieb der Rutsche 4a oder durch eine Stell- oder Sollgröße für eine Antriebsrolle der Zielfördertechnik 11. Denkbar ist weiterhin, dass einige der Beladeparameter P1..P3 für die Simulation generiert werden, etwa eine Beladereihenfolge für das Zielladehilfsmittel 2.

Die optionale Kamera 9 dient der Erfassung des Beladens des Zielladehilfsmittels 2 mit den Waren 3 im Schritt h1). In Folge kann ein Modell für die Simulation des Beladevorgangs adaptiv entsprechend der Erfassung des Beladens durch die Kamera 9 an ein reales Beladen angepasst werden. Insbesondere werden die Beladeeigenschaften E1, E2 und/oder die Beladeparameter P1..P3 entsprechend der Erfassung angepasst. Dadurch können falsche Annahmen betreffend das Modell für die Simulation des Beladevorgangs und insbesondere falsche Annahmen betreffend die Beladeeigenschaften E1, E2 und/oder die Beladeparameter P1..P3 korrigiert und an die Realität angepasst werden. Die Simulation nähert sich im Lauf der Zeit so immer mehr den realen Gegebenheiten an.

Von Vorteil ist es generell auch, wenn das Beladen des Zielladehilfsmittels 2 mit Hilfe virtueller Zwillinge der Beladevorrichtung 4, 4a, 4b, des Zielladehilfsmittels 2 und/oder der Waren 3 virtualisiert wird, und die Beladeeigenschaften E1, E2 und/oder die Beladeparameter P1..P3 der virtuellen Beladevorrichtung 4, 4a, 4b, des virtuellen Zielladehilfsmittels 2 und/oder der virtuellen Waren 3 entsprechend der Erfassung des Beladens durch die Kamera 9 angepasst werden. Virtuelle Zwillinge eignen sich besonders gut dafür, Simulationen umzusetzen beziehungsweise auch zu beobachten und auszuwerten. Dabei kann ein Mensch oder auch eine Künstliche Intelligenz helfen, in möglichst wenigen Simulationsdurchläufen ein optimiertes Ergebnis, das heißt eine optimierte Erfüllung der Zielvorgabe zu erreichen.

Vorteilhaft ist es generell auch, wenn der Schritt e) mit veränderten Beladeeigenschaften E1, E2 wiederholt wird. Dadurch kann berücksichtigt werden, dass Beladeeigenschaften E1, E2 unter Umständen nicht genau bestimmbar sind. Weiterhin kann die Verwendung alternativer Beladevorrichtungen 4, 4a, 4b beziehungsweise eine Beladung des Zielladehilfsmittels 2 mit anderen Waren 3 im Schritt e) zu unterschiedlichen Eigenschaften E1 der Beladevorrichtung 4, 4a, 4b und Wareneigenschaften E2 der Waren 3 führen.

Von Vorteil ist es generell auch, wenn
im Schritt b) zusätzlich Toleranzbereiche für die Beladeeigenschaften E1, E2, insbesondere für die Wareneigenschaften, in der Simulationseinheit 7 bereitgestellt und Werte für die Beladeeigenschaften E1, E2 innerhalb der gegebenen Toleranzbereiche gewählt werden,
im Schritt d) das Simulieren für die gewählten Werte der Beladeeigenschaften E1, E2 durchgeführt wird, und
im Schritt e) Werte für die Beladeeigenschaften E1, E2 innerhalb der Toleranzbereiche geändert werden, und
die Zielvorgabe im Schritt f) eine Robustheit des Beladevorgangs gegenüber Variationen der Beladeeigenschaften E1, E2 umfasst.

Wie erwähnt, sind Beladeeigenschaften E1, E2 unter Umständen nicht genau bestimmbar. Vorteilhaft werden Beladeeigenschaften E1, E2 durch Variation innerhalb von Toleranzbereichen geändert, insbesondere zufällig. Dadurch kann die genannte Unsicherheit bei der Bestimmung von Beladeeigenschaften E1, E2 berücksichtigt werden.

Von Vorteil ist es generell zudem, wenn
im Schritt c) zusätzlich Toleranzbereiche für die Beladeparameter P1..P3 in der Simulationseinheit 7 bereitgestellt und Werte für die Beladeparameter P1..P3 innerhalb der gegebenen Toleranzbereiche gewählt werden,
im Schritt d) das Simulieren für die gewählten Werte der Beladeparameter P1..P3 durchgeführt wird, und
im Schritt e) Werte für die Beladeparameter P1..P3 innerhalb der Toleranzbereiche geändert werden, und
die Zielvorgabe im Schritt f) eine Robustheit des Beladevorgangs gegenüber Variationen der Beladeparameter P1..P3 umfasst.

Auch Beladeparameter P1..P3 sind unter Umständen nicht genau bestimmbar. Beispielsweise kann ein Stellantrieb für das Einstellen der Rutsche 4a mit Toleranzen behaftet sein, wodurch auch der Beladevorgang diesbezüglich mit einer Unsicherheit behaftet ist. Vorteilhaft können auch Beladeparameter P1..P3 durch Variation innerhalb von Toleranzbereichen geändert werden, insbesondere wiederum zufällig. Dadurch kann die genannte Unsicherheit bei der Bestimmung von Beladeparametern P1..P3 berücksichtigt werden.

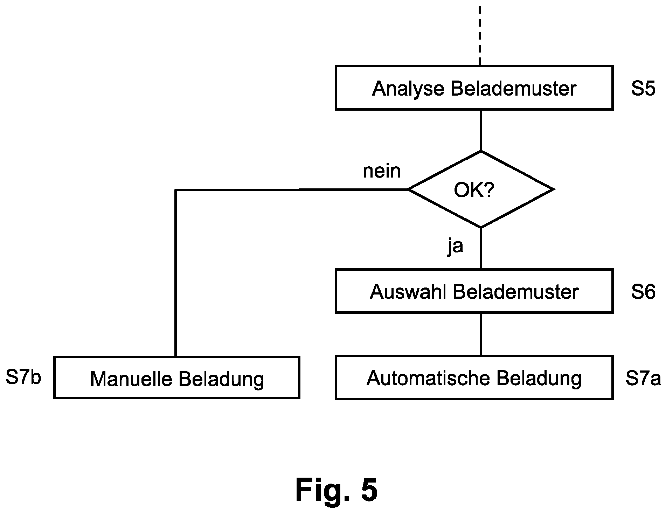

Fig. 5 zeigt die erfindungsgemäße Ausführungsvariante, bei der das vorgestellte Verfahren zusätzlich den Schritt umfasst
h2) Antransportieren der Waren 3 zur weiteren Beladevorrichtung 4' der Beladestation 1, 1a, 1b und Beladen des Zielladehilfsmittels 2 mit den Waren 3 durch das Bedienorgan, wobei
das Beurteilen im Schritt f) ein Überprüfen umfasst, ob zumindest eines der Belademuster die Zielvorgabe erfüllt, und
die Schritte g) und h1) durchgeführt werden, wenn zumindest eines der Belademuster die Zielvorgabe erfüllt (siehe Schritt S7a), oder

Schritt h2) unter Auslassung des Schrittes g) durchgeführt wird, wenn keines der Belademuster die Zielvorgabe erfüllt (siehe Schritt S7b).

Dadurch können im Lager- und Kommissioniersystem 13a, 13b auch Waren 3 gehandhabt werden, für die bei der Simulation des Beladevorgangs kein geeignetes Belademuster aufgefunden werden kann.

Das Bedienorgan ist eine Bedienperson 16. Ein Bedienorgan kann aber auch ein humanoider Roboter oder ein Roboter mit Greifarm sein, der in der Lage ist, eine Ablageposition im Zielladehilfsmittel 2 selbst zu wählen, beispielsweise über einen Künstlichen-Intelligenz-Algorithmus. Die weitere Beladevorrichtung 4'ist eine manuelle Beladevorrichtung 4'.

In einer weiteren vorteilhaften Variante wird eine Analysemenge definiert, welche eine beliebige Anzahl an Aufträgen OD umfasst, wobei die Schritte a) bis g) für alle Aufträge OD der Analysemenge durchgeführt werden, wobei das Verfahren zwischen den Schritten f) und g) folgende Schritte umfasst:
i) Erstellen einer ersten Auftragsmenge, welche sämtliche Aufträge OD umfasst, für welche zumindest ein Belademuster erstellt wurde, das die Zielvorgabe erfüllt,
ii) Erstellen einer zweiten Auftragsmenge, welche sämtliche Aufträge OD umfasst, für welche kein Belademuster erstellt wurde, das die Zielvorgabe erfüllt.

Auf diese Weise kann eine Vielzahl von Aufträgen OD im Voraus simuliert werden, wobei die Aufträge OD nachfolgend in automatisch bearbeitbare Aufträge OD (erste Auftragsmenge) und nicht automatisch bearbeitbare Aufträge OD (zweite Auftragsmenge) eingeteilt und entsprechend weiterverarbeitet werden. Die zweite Auftragsmenge wird dabei insbesondere von einem Bedienorgan erledigt (vergleiche auch Fig. 5).

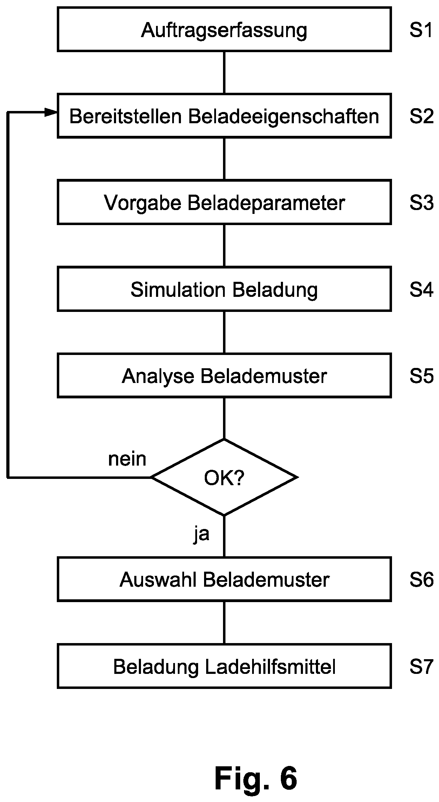

Fig. 6 zeigt eine weitere Ausführungsvariante, bei der Schritt f) vor dem Schritt e) ausgeführt wird, wobei
das Beurteilen im Schritt f) ein Überprüfen umfasst, ob das erstellte Belademuster die Zielvorgabe erfüllt, und
nach dem Schritt f) der Schritt e) durchgeführt wird, wenn das ermittelte Belademuster die Zielvorgabe nicht erfüllt, oder
nach Schritt f) unter Auslassung des Schrittes e) der Schritt g) durchgeführt wird, wenn das ermittelte Belademuster die Zielvorgabe erfüllt.

Bei dieser Ausführungsvariante wird kein weiterer Durchlauf einer Simulation durchgeführt, sobald ein Belademuster die Zielvorgabe erfüllt. Dadurch führt diese Ausführungsvariante besonders schnell zu einem Ergebnis.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1, 1a, 1b: Beladestation
- 2: Zielladehilfsmittel
- 3: Ware
- 4, 4a, 4b: (automatische) Beladevorrichtung
- 4': (manuelle) Beladevorrichtung
- 5: Auftragsrechner

- 6: Datenbank
- 7: Simulationseinheit
- 8: Computersystem
- 9: Kamera
- 10, 10a, 10b: Quellfördertechnik

- 11: Zielfördertechnik
- 12: Lagerbereich
- 13a, 13b: Lager- und Kommissioniersystem
- 14: Quellladehilfsmittel (Hängetasche)
- 15, 15': Führungsbahn

- 16: Bedienperson
- 17: Ein- und/oder Ausgabevorrichtung

- OD: Auftrag
- E1, E2: Beladeeigenschaft
- P1..P3: Beladeparameter
- S1..S7: Verfahrensschritt

## Patentansprüche

1. Verfahren zum Beladen eines Zielladehilfsmittels (2) mit Waren (3) an einer Beladestation (1, 1a, 1b) mit einer automatischen Beladevorrichtung (4, 4a, 4b), umfassend die Schritte:
a) Erfassen (S1) eines Auftrags (OD) und Bestimmen von dem Auftrag (OD) zugeordneten Waren (3) durch einen Auftragsrechner (5),
b) Bereitstellen (S2) von Beladeeigenschaften, umfassend Eigenschaften (E1) der Beladevorrichtung (4, 4a, 4b) und Wareneigenschaften (E2) der Waren (3), in einer Datenbank (6) für eine Simulationseinheit (7),
c) Vorgeben (S3) von Beladeparametern, umfassend zumindest einen Parameter (P1) betreffend die Beladevorrichtung (4, 4a, 4b) und/oder zumindest einen Parameter (P2) betreffend die Waren (3) und/oder zumindest einen Parameter (P3) betreffend das Zielladehilfsmittel (2), in der Simulationseinheit (7),
d) Simulieren (S4) eines Beladevorgangs des Zielladehilfsmittels (2) mit Waren (3) mit Hilfe der Simulationseinheit (7) basierend auf den Beladeeigenschaften (E1, E2) und den Beladeparametern (P1..P3) und Erstellen eines Belademusters durch die Simulationseinheit (7),
e) Wiederholen der Schritte b) bis d) mit veränderten Beladeparametern (P1..P3),
f) Analysieren (S5) erstellter Belademuster auf Basis einer Zielvorgabe mittels der Simulationseinheit (7), inkludierend ein Überprüfen, ob zumindest eines der Belademuster die Zielvorgabe erfüllt, und Ausführen der nachfolgenden Schritte g) und h1), wenn zumindest eines der Belademuster die Zielvorgabe erfüllt, oder Ausführen des nachfolgenden Schrittes h2) unter Auslassung des Schrittes g), wenn keines der Belademuster die Zielvorgabe erfüllt,
g) Auswählen (S6) jenes Belademusters, welches die Zielvorgabe am besten erfüllt, und Erstellen einer Beladevorschrift für die Beladevorrichtung (4, 4a, 4b), umfassend die Beladeparameter (P1..P3), welche zum ausgewählten Belademuster führen, mittels der Simulationseinheit (7), und
h1) Antransportieren (S7) der Waren (3) zu der automatischen Beladevorrichtung (4, 4a, 4b) der Beladestation (1, 1a, 1b) und Beladen des Zielladehilfsmittels (2) mit den Waren (3) durch die automatische Beladevorrichtung (4, 4a, 4b) gemäß der Beladevorschrift, oder
h2) Antransportieren der Waren (3) zu einer manuellen Beladevorrichtung (4') der Beladestation (1, 1a, 1b) und Beladen des Zielladehilfsmittels (2) mit den Waren (3) durch eine Bedienperson (16).

2. Verfahren nach Anspruch 1, **dadurch gekennzeichnet, dass** zum Beladen des Zielladehilfsmittels (2) zumindest eine Ware (3) der Waren (3) durch Fallen, Gleiten und/oder Werfen in das Zielladehilfsmittel (2) abgegeben wird.

3. Verfahren nach Anspruch 1 oder 2, **dadurch gekennzeichnet, dass** der Schritt f) vor dem Schritt e) ausgeführt wird, wobei
das Beurteilen im Schritt f) ein Überprüfen umfasst, ob das erstellte Belademuster die Zielvorgabe erfüllt, und
nach dem Schritt f) der Schritt e) durchgeführt wird, wenn das ermittelte Belademuster die Zielvorgabe nicht erfüllt, oder
nach Schritt f) unter Auslassung des Schrittes e) der Schritt g) durchgeführt wird, wenn das ermittelte Belademuster die Zielvorgabe erfüllt.

4. Verfahren nach einem der vorangehenden Ansprüche, **dadurch gekennzeichnet, dass** eine Analysemenge definiert wird, welche eine beliebige Anzahl an Aufträgen (OD) umfasst, wobei die Schritte a) bis g) für alle Aufträge (OD) der Analysemenge durchgeführt werden, wobei das Verfahren zwischen den Schritten f) und g) folgende Schritte umfasst:
i) Erstellen einer ersten Auftragsmenge, welche sämtliche Aufträge (OD) umfasst, für welche zumindest ein Belademuster erstellt wurde, das die Zielvorgabe erfüllt, und
ii) Erstellen einer zweiten Auftragsmenge, welche sämtliche Aufträge (OD) umfasst, für welche kein Belademuster erstellt wurde, das die Zielvorgabe erfüllt.

5. Verfahren nach einem der vorangehenden Ansprüche, **dadurch gekennzeichnet, dass**
der zumindest eine Parameter (P1) betreffend die Beladevorrichtung (4, 4a, 4b) ausgewählt ist aus einer Gruppe umfassend eine Bauart der Beladevorrichtung (4, 4a, 4b), eine Beladegeschwindigkeit, einen Auskippwinkel eines Quellladehilfsmittels (14), eine Fallhöhe der Ware (3) in das Zielladehilfsmittel (2) und/oder eine Beladeposition des Zielladehilfsmittels (2), und/oder
der zumindest eine Parameter (P2) betreffend die Waren (3) ausgewählt ist aus einer Gruppe umfassend eine Auswahl von Waren (3) eines Auftrags (OD), eine Beladereihenfolge und/oder eine Pose der Ware (3) bei einem Zuführen der Waren (3) zum Zielladehilfsmittel (2), und/oder
der zumindest eine Parameter (P3) betreffend das Zielladehilfsmittel (2) ausgewählt ist aus einer Gruppe umfassend eine Zielladehilfsmittel-Orientierung, Zielladehilfsmittel-Position, Zielladehilfsmittel-Form und/oder eine Zielladehilfsmittel-Dimensionierung.

6. Verfahren nach einem der vorangehenden Ansprüche, **dadurch gekennzeichnet, dass** die Zielvorgabe ausgewählt ist aus einer Gruppe umfassend einen Füllgrad des Zielladehilfsmittels (2), einen Zustand der Waren (3) im Zielladehilfsmittel (2) und/oder eine Pose der Waren (3) im Zielladehilfsmittel (2).

7. Verfahren nach Anspruch 6, **dadurch gekennzeichnet, dass** zum Erstellen des Belademusters
der Zustand der Waren (3) durch die Simulationseinheit (7) berechnet wird, welchen die Ware (3) nach Erreichen eines Ruhezustands nach einem simulierten Beladen des Zielladehilfsmittels (2) mit den Waren (3) aufweisen,
der Füllgrad des Zielladehilfsmittels (2) durch die Simulationseinheit (7) berechnet wird, und/oder
die Pose der Waren (3) im Zielladehilfsmittel (2) durch die Simulationseinheit (7) berechnet wird, welche die Waren (3) nach Erreichen des Ruhezustands nach dem simulierten Beladen des Zielladehilfsmittels (2) mit den Waren (3) aufweisen.

8. Verfahren nach einem der vorangehenden Ansprüche, **dadurch gekennzeichnet, dass** Schritt e) mit veränderten Beladeeigenschaften (E1, E2) wiederholt wird.

9. Verfahren nach einem der vorangehenden Ansprüche, **dadurch gekennzeichnet, dass**
im Schritt b) zusätzlich Toleranzbereiche für die Beladeeigenschaften (E1, E2) in der Simulationseinheit (7) bereitgestellt und Werte für die Beladeeigenschaften (E1, E2) innerhalb der gegebenen Toleranzbereiche gewählt werden,
im Schritt d) das Simulieren für die gewählten Werte der Beladeeigenschaften (E1, E2) durchgeführt wird,
im Schritt e) Werte für die Beladeeigenschaften (E1, E2) innerhalb der Toleranzbereiche geändert werden, und
die Zielvorgabe im Schritt f) eine Robustheit des Beladevorgangs gegenüber Variationen der Beladeeigenschaften (E1, E2) umfasst.

10. Verfahren nach einem der vorangehenden Ansprüche, **dadurch gekennzeichnet, dass**
im Schritt c) zusätzlich Toleranzbereiche für die Beladeparameter (P1..P3) in der Simulationseinheit (7) bereitgestellt und Werte für die Beladeparameter (P1..P3) innerhalb der gegebenen Toleranzbereiche gewählt werden,
im Schritt d) das Simulieren für die gewählten Werte der Beladeparameter (P1..P3) durchgeführt wird,
im Schritt e) Werte für die Beladeparameter (P1..P3) innerhalb der Toleranzbereiche geändert werden, und
die Zielvorgabe im Schritt f) eine Robustheit des Beladevorgangs gegenüber Variationen der Beladeparameter (P1..P3) umfasst.

11. Verfahren nach einem der vorangehenden Ansprüche, **dadurch gekennzeichnet, dass** das Beladen des Zielladehilfsmittels (2) mit den Waren (3) im Schritt h1) durch eine Kamera (9) erfasst wird, und in der Simulationseinheit (7) ein Modell für die Simulation des Beladens adaptiv entsprechend der Erfassung des Beladens durch die Kamera (9) an ein reales Beladen angepasst wird.

12. Verfahren nach Anspruch 11, **dadurch gekennzeichnet, dass** die Beladeeigenschaften (E1, E2) und/oder die Beladeparameter (P1..P3) entsprechend der Erfassung angepasst werden.

13. Verfahren nach Anspruch 11 oder 12, **dadurch gekennzeichnet, dass** das Beladen des Zielladehilfsmittels (2) mit Hilfe virtueller Zwillinge der Beladevorrichtung (4, 4a, 4b), des Zielladehilfsmittels (2) und/oder der Waren (3) virtualisiert wird, und die Beladeeigenschaften (E1, E2) und/oder die Beladeparameter (P1..P3) der virtuellen Beladevorrichtung (4, 4a, 4b), des virtuellen Zielladehilfsmittels (2) und/oder der virtuellen Waren (3) entsprechend der Erfassung des Beladens durch die Kamera (9) angepasst werden.

14. Lager- und Kommissioniersystem (13a, 13b), umfassend
- einen Lagerbereich (12) zur Bereitstellung von Waren (3),
- eine Beladestation (1, 1a, 1b) mit einer automatischen Beladevorrichtung (4, 4a, 4b) und einer manuellen Beladevorrichtung (4'),
- eine Quellfördertechnik (10, 10a, 10b) zum Transport der Waren (3), welche den Lagerbereich (12) und die Beladestation (1, 1a, 1b) verbindet,
- einen Auftragsrechner (5) zum Erfassen (S1) eines Auftrags (OD) und zum Bestimmen von dem Auftrag (OD) zugeordneten Waren (3),
- zumindest eine Datenbank (6), in welcher Beladeeigenschaften, umfassend Eigenschaften (E1) der Beladevorrichtung (4, 4a, 4b) und Wareneigenschaften (E2) der Waren (3), bereitstellbar sind, und
- eine Simulationseinheit (7), welche mit der zumindest einen Datenbank (6) datentechnisch verbunden ist, und welche ausgebildet ist zum
Verarbeiten (S2) von Beladeeigenschaften, umfassend Eigenschaften (E1) der Beladevorrichtung (4, 4a, 4b) und Wareneigenschaften (E2) der Waren (3),
Verarbeiten einer Vorgabe (S3) von Beladeparametern, umfassend zumindest einen Parameter (P1) betreffend die Beladevorrichtung (4, 4a, 4b) und/oder zumindest einen Parameter (P2) betreffend die Waren (3) und/oder zumindest einen Parameter (P3) betreffend das Zielladehilfsmittel (2),
Simulieren (S4) eines Beladevorgangs des Zielladehilfsmittels (2) mit Waren (3) basierend auf den Beladeeigenschaften (E1, E2) und den Beladeparametern (P1..P3),
Erstellen eines Belademusters,
Wiederholen der zuvor genannten Schritte mit veränderten Beladeparametern (P1..P3),
Analysieren (S5) erstellter Belademuster auf Basis der Zielvorgabe, inkludierend ein Überprüfen, ob zumindest eines der Belademuster die Zielvorgabe erfüllt, und
Auswählen (S6) jenes Belademusters, welches die Zielvorgabe am besten erfüllt, und Erstellen der Beladevorschrift für die Beladevorrichtung (4, 4a, 4b), umfassend die Beladeparameter (P1..P3), welche zum ausgewählten Belademuster führen, wenn zumindest eines der Belademuster die Zielvorgabe erfüllt,
wobei die Quellfördertechnik (10, 10a, 10b) zum Antransportieren (S7) der Waren (3) zu der automatischen Beladevorrichtung (4, 4a, 4b) ausgebildet ist, wenn zumindest eines der Belademuster die Zielvorgabe erfüllt, und zum Antransportieren (S7) der Waren (3) zu der manuellen Beladevorrichtung (4'), wenn keines der Belademuster die Zielvorgabe erfüllt, und
wobei die Beladestation (1, 1a, 1b) zum Beladen des Zielladehilfsmittels (2) mit den Waren (3) durch die automatische Beladevorrichtung (4, 4a, 4b) gemäß der Beladevorschrift ausgebildet ist, wenn zumindest eines der Belademuster die Zielvorgabe erfüllt, und zum Beladen des Zielladehilfsmittels (2) mit den Waren (3) durch die Bedienperson (16) an der manuellen Beladevorrichtung (4'), wenn keines der Belademuster die Zielvorgabe erfüllt.

15. Lager- und Kommissioniersystem (13a, 13b) nach Anspruch 14, **dadurch gekennzeichnet, dass** der Lagerbereich (12) eine Vielzahl von ortsfest aufgestellten Lagerregalen und zumindest ein automatisiert betriebenes Regalbediengerät zum Einlagern der Waren (3) in die Lagerregale und/oder Auslagern der Waren (3) aus den Lagerregalen aufweist.

16. Lager- und Kommissioniersystem (13a, 13b) nach Anspruch 14 oder 15, **dadurch gekennzeichnet, dass** die Quellfördertechnik (10, 10a, 10b) und/oder eine Zielfördertechnik (11) als stationäre oder mobile Fördertechnik ausgebildet ist.

17. Lager- und Kommissioniersystem (13a, 13b) nach einem der Ansprüche 14 bis 16, **dadurch gekennzeichnet, dass**
die Quellfördertechnik (10, 10a, 10b) zum liegenden oder hängenden Transport der Waren (3) oder von Quellladehilfsmitteln (14) mit Waren (3) ausgebildet ist, und/oder
die Zielfördertechnik (11) zum liegenden oder hängenden Transport der Waren (3) oder von Zielladehilfsmitteln (2) mit Waren (3) ausgebildet ist.

## Claims

1. A method for loading a target loading aid (2) with articles (3) at a loading station (1, 1a, 1b) with an automatic loading device (4, 4a, 4b) comprising the steps:
a) acquiring (S1) an order (OD) and determining the articles (3) associated with the order (OD) using an order-processing computer (5),
b) providing (S2) loading properties comprising properties (E1) of the loading device (4, 4a, 4b) and articles properties (E2) of the articles (3) in a database (6) for a simulation unit (7),
c) specifying (S3) loading parameters comprising at least one parameter (P1) relating to the loading device (4, 4a, 4b) and/or at least one parameter (P2) relating to the articles (3) and/or at least one parameter (P3) relating to the target loading aid (2) in the simulation unit (7),
d) simulating (S4) a loading operation of the target loading aid (2) with articles (3) using the simulation unit (7) based on the loading properties (E1, E2) and the loading parameters (P1..P3) and generating a loading pattern with the simulation unit (7),
e) repeating steps b) to d) with modified loading parameters (P1..P3),
f) analysing (S5) the loading patterns generated on the basis of a target specification using the simulation unit (7) including checking whether at least one of the loading patterns fulfils the target specification and executing the following steps g) and h1) if at least one of the loading patterns fulfils the target specification or executing the following step h2), omitting step g), if none of the loading patterns fulfils the target specification,
g) selecting (S6) that loading pattern which best fulfils the target specification and generating the loading regulation for the loading device (4, 4a, 4b) comprising the loading parameters (P1..P3) which lead to the selected loading pattern using the simulation unit (7), and
h1) transporting (S7) the articles (3) to the automatic loading device (4, 4a, 4b) of the loading station (1, 1a, 1b) and loading the target loading aid (2) with the articles (3) using the automatic loading device (4, 4a, 4b) according to the loading regulation, or
h2) transporting the articles (3) to a manual loading device (4') of the loading station (1, 1a, 1b) and loading the target loading aid (2) with the articles (3) by an operator (16).

2. The method according to claim 1, **characterized in that** for loading the target loading aid (2), at least one article (3) of the articles (3) is transferred to the target loading aid (2) by falling, sliding and/or throwing.

3. The method according to claim 1 or 2, **characterized in that** the step f) is executed before the step e), wherein
evaluating in step f) comprises checking whether the generated loading pattern fulfils the target specification, and
after step f), step e) is executed if the determined loading pattern does not fulfil the target specification, or
after step f), step g) is executed, omitting step e), if the determined loading pattern fulfils the target specification.

4. The method according to one of the preceding claims, **characterized in that** an analysis quantity is defined that comprises any number of orders (OD), wherein steps a) to g) are executed for all orders (OD) of the analysis quantity, wherein the method comprises the following steps between steps f) and g):
i) generating a first order quantity, which comprises all orders (OD) for which at least one loading pattern has been generated that fulfils the target specification, and
ii) generating a second order quantity, which comprises all orders (OD) for which at least one loading pattern has been generated that fulfils the target specification.

5. The method according to one of the preceding claims, **characterized in that**
the at least one parameter (P1) relating to the loading device (4, 4a, 4b) is selected from a group comprising a construction of the loading device (4, 4a, 4b), a loading speed, a dumping angle of a source loading aid (14), a drop height of the article (3) into the target loading aid (2) and/or a loading position of the target loading aid (2), and/or
the at least one parameter (P2) relating to the articles (3) is selected from a group comprising a selection of articles (3) of an order (OD), a loading sequence and/or a pose of the article (3) when the articles (3) are fed to the target loading aid (2), and/or
the at least one parameter (P3) relating to the target loading aid (2) is selected from a group comprising a target loading aid orientation, target loading aid position, target loading aid shape and/or target loading aid dimensioning.

6. The method according to one of the preceding claims, **characterized in that** the target specification is selected from a group comprising a fill level of the target loading aid (2), a state of the articles (3) in the target loading aid (2) and/or a pose of the articles (3) in the target loading aid (2).

7. The method according to claim 6, **characterized in that**, to generate the loading pattern,
the state of the articles (3) is calculated by the simulation unit (7), the article (3) having said state after reaching the resting state after simulated loading of the target loading aid (2) with the articles (3),
the fill level of the target loading aid (2) is calculated by the simulation unit (7), and/or
the pose of the articles (3) in the target loading aid (2) is calculated by the simulation unit (7), the articles (3) having said pose after reaching the resting state after the simulated loading of the target loading aid (2) with the articles (3).

8. The method according to one of the preceding claims, **characterized in that** the step e) is repeated with modified loading properties (E1, E2).

9. The method according to one of the preceding claims, **characterized in that**
in step b), tolerance ranges for the loading properties (E1, E2) are additionally provided in the simulation unit (7) and values for the loading properties (E1, E2) are selected within the given tolerance ranges,
in step d), the simulation is executed for the selected values of the loading properties (E1, E2),
in step e), values for the loading properties (E1, E2) are modified within the tolerance ranges, and
the target specification in step f) comprises a robustness of the loading process in relation to variations of the loading properties (E1, E2).

10. The method according to one of the preceding claims, **characterized in that**
in step c), tolerance ranges for the loading parameters (P1..P3) are additionally provided in the simulation unit (7) and values for the loading parameters (P1..P3) are selected within the given tolerance ranges,
in step d), the simulation is executed for the selected values of the loading parameters (P1..P3),
in step e), values for the loading parameters (P1..P3) are modified within the tolerance ranges, and
the target specification in step f) comprises a robustness of the loading process in relation to variations of the loading parameters (P1..P3).

11. The method according to one of the preceding claims, **characterized in that** loading the target loading aid (2) with the articles (3) in step h1) is detected by a camera (9) and a model for simulating loading in the simulation unit (7) is adaptively adjusted in accordance with the detection of the camera (9) to real loading.

12. The method according to claim 11, **characterized in that** the loading properties (E1, E2) and/or the loading parameters (P1..P3) are adjusted according to the detection.

13. The method according to claim 11 or 12, **characterized in that** loading the target loading aid (2) is virtualised using virtual twins of the loading device (4, 4a, 4b), the target loading aid (2) and/or the articles (3), and the loading properties (E1, E2) and/or the loading parameters (P1..P3) of the virtual loading device (4, 4a, 4b), the virtual target loading aid (2) and/or the virtual articles (3) are adjusted in accordance with the detection of loading by the camera (9).

14. A storage and picking system (13a..13b) comprising
- a storage zone (12) for providing articles (3),
- a loading station (1, 1a, 1b) with an automatic loading device (4, 4a, 4b) and a manual loading device (4'),
- a source conveying system (10, 10a, 10b) for transporting the articles (3) that connects the storage zone (12) and the loading station (1, 1a, 1b),
- an order-processing computer (5) for acquiring (S1) an order (OD) and determining the articles (3) associated with the order (OD),
- at least one database (6), in which loading properties comprising properties (E1) of the loading device (4, 4a, 4b) and articles properties (E2) of the articles (3), can be provided, and
- a simulation unit (7), which is data-technically connected to the at least one database (6) and which is configured for
processing (S2) loading properties, comprising properties (E1) of the loading device (4, 4a, 4b) and articles properties (E2) of the articles (3),
processing a loading parameter specification (S3) comprising at least one parameter (P1) relating to the loading device (4, 4a, 4b) and/or at least one parameter (P2) relating to the articles (3) and/or at least one parameter (P3) relating to the target loading aid (2),
simulating (S4) a loading operation of the target loading aid (2) with articles (3) based on the loading properties (E1, E2) and the loading parameters (P1..P3), generating a loading pattern,
repeating the aforementioned steps with modified loading parameters (P1..P3),
analysing (S5) the loading patterns generated on the basis of the target specification including checking whether at least one of the loading patterns fulfils the target specification, and
selecting (S6) that loading pattern which best fulfils the target specification and generating the loading regulation for the loading device (4, 4a, 4b) comprising the loading parameters (P1..P3) that lead to the selected loading pattern if at least one of the loading patterns fulfils the target specification,
wherein the source conveying system (10, 10a, 10b) is configured to transport (S7) the articles (3) to the automatic loading device (4, 4a, 4b) if at least one of the loading patterns fulfils the target specification and to transport (S7) the articles (3) to the manual loading device (4') if none of the loading patterns fulfils the target specification, and
wherein the loading station (1, 1a, 1b) is configured to load the target loading aid (2) with the articles (3) by the automatic loading device (4, 4a, 4b) according to the loading regulation if at least one of the loading patterns fulfils the target specification and to load the target loading aid (2) with the articles (3) by the operator (16) at the manual loading device (4') if none of the loading patterns fulfils the target specification.

15. The storage and picking system (13a, 13b) according to claim 14, **characterized in that** the storage zone (12) has a plurality of stationary storage racks and at least one automatically operated storage and retrieval device for storing the articles (3) in the storage racks and/or retrieving the articles (3) from the storage racks.

16. The storage and picking system (13a, 13b) according to claim 14 or 15, **characterized in that** the source conveying system (10, 10a, 10b) and/or a target conveying system (11) is configured as a stationary or mobile conveying system.

17. The storage and picking system (13a, 13b) according to one of claims 14 to 16, **characterised in that**
the source conveying system (10, 10a, 10b) is configured for horizontal (lying) or suspended transport of articles (3) or source loading aids (14) with articles (3), and/or
the target conveying system (11) is configured for horizontal (lying) or suspended transport of the articles (3) or target loading aids (2) with articles (3).

## Revendications

1. Procédé de chargement d'une unité de chargement cible (2) avec des marchandises (3) dans une station de chargement (1, 1a, 1b) avec un dispositif de chargement automatique (4, 4a, 4b), comprenant les étapes suivantes :
a) détection (S1) d'une commande (OD) et détermination des marchandises (3) associées à la commande (OD) par un ordinateur de commande (5),
b) mise à disposition (S2) de caractéristiques de chargement, comprenant des caractéristiques (E1) du dispositif de chargement (4, 4a, 4b) et des caractéristiques de marchandise (E2) des marchandises (3), dans une base de données (6) pour une unité de simulation (7),
c) définition (S3) de paramètres de chargement, comprenant au moins un paramètre (P1) concernant le dispositif de chargement (4, 4a, 4b) et/ou au moins un paramètre (P2) concernant les marchandises (3) et/ou au moins un paramètre (P3) concernant l'unité de chargement cible (2), dans l'unité de simulation (7),
d) simulation (S4) d'un processus de chargement de l'unité de chargement cible (2) avec des marchandises (3) à l'aide de l'unité de simulation (7) sur la base des caractéristiques de chargement (E1, E2) et des paramètres de chargement (P1... P3) et création d'un modèle de chargement par l'unité de simulation (7),
e) répétition des étapes b) à d) avec des paramètres de chargement modifiés (P1... P3),
f) analyse (S5) des modèles de chargement créés sur la base d'un objectif cible au moyen de l'unité de simulation (7), incluant une vérification pour savoir si au moins l'un des modèles de chargement satisfait l'objectif cible, et exécution des étapes g) et h1) suivantes si au moins l'un des modèles de chargement satisfait l'objectif cible, ou exécution de l'étape h2) suivante en omettant l'étape g) si aucun des modèles de chargement ne satisfait l'objectif cible,
g) sélection (S6) du modèle de chargement qui satisfait le mieux l'objectif cible, et création d'une instruction de chargement pour le dispositif de chargement (4, 4a, 4b), comprenant les paramètres de chargement (P1... P3) qui conduisent au modèle de chargement sélectionné, au moyen de l'unité de simulation (7), et
h1) acheminement (S7) des marchandises (3) vers le dispositif de chargement automatique (4, 4a, 4b) de la station de chargement (1, 1a, 1b) et chargement de l'unité de chargement cible (2) avec les marchandises (3) par le dispositif de chargement automatique (4, 4a, 4b) conformément à l'instruction de chargement, ou
h2) acheminement des marchandises (3) vers un dispositif de chargement manuel (4') de la station de chargement (1, 1a, 1b) et chargement de l'unité de chargement cible (2) avec les marchandises (3) par un opérateur (16).

2. Procédé selon la revendication 1, **caractérisé en ce que** pour le chargement de l'unité de chargement cible (2), au moins une marchandise (3) des marchandises (3) est déposée dans l'unité de chargement cible (2) par chute, glissement et/ou projection.

3. Procédé selon la revendication 1 ou 2, **caractérisé en ce que** l'étape f) est exécutée avant l'étape e), dans lequel
l'évaluation à l'étape f) comprend une vérification pour savoir si le modèle de chargement créé satisfait l'objectif cible, et
après l'étape f), l'étape e) est exécutée si le modèle de chargement déterminé ne satisfait pas l'objectif cible, ou
après l'étape f) en omettant l'étape e), l'étape g) est exécutée si le modèle de chargement déterminé satisfait l'objectif cible.

4. Procédé selon l'une des revendications précédentes, **caractérisé en ce qu'**une quantité d'analyse est définie, qui comprend un nombre quelconque de commandes (OD), dans lequel les étapes a) à g) sont exécutées pour toutes les commandes (OD) de la quantité d'analyse, dans lequel le procédé comprend les étapes suivantes entre les étapes f) et g) :
i) création d'une première quantité de commandes, qui comprend toutes les commandes (OD) pour lesquelles au moins un modèle de chargement a été créé qui satisfait l'objectif cible, et
ii) création d'une deuxième quantité de commandes, qui comprend toutes les commandes (OD) pour lesquelles aucun modèle de chargement n'a été créé qui satisfait l'objectif cible.

5. Procédé selon l'une des revendications précédentes, **caractérisé en ce que** l'au moins un paramètre (P1) concernant le dispositif de chargement (4, 4a, 4b) est choisi dans un groupe comprenant un type de construction du dispositif de chargement (4, 4a, 4b), une vitesse de chargement, un angle de basculement d'une unité de chargement source (14), une hauteur de chute de la marchandise (3) dans l'unité de chargement cible (2) et/ou une position de chargement de l'unité de chargement cible (2), et/ou
l'au moins un paramètre (P2) concernant les marchandises (3) est choisi dans un groupe comprenant une sélection de marchandises (3) d'une commande (OD), une séquence de chargement et/ou une pose de la marchandise (3) lors d'une alimentation des marchandises (3) vers l'unité de chargement cible (2), et/ou
l'au moins un paramètre (P3) concernant l'unité de chargement cible (2) est choisi dans un groupe comprenant une orientation de l'unité de chargement cible, une position de l'unité de chargement cible, une forme de l'unité de chargement cible et/ou un dimensionnement de l'unité de chargement cible.

6. Procédé selon l'une des revendications précédentes, **caractérisé en ce que** l'objectif cible est choisi dans un groupe comprenant un degré de remplissage de l'unité de chargement cible (2), un état des marchandises (3) dans l'unité de chargement cible (2) et/ou une pose des marchandises (3) dans l'unité de chargement cible (2).

7. Procédé selon la revendication 6, **caractérisé en ce que** pour la création du modèle de chargement
l'état des marchandises (3) est calculé par l'unité de simulation (7), état que la marchandise (3) présente après avoir atteint un état de repos suite à un chargement simulé de l'unité de chargement cible (2) avec les marchandises (3),
le degré de remplissage de l'unité de chargement cible (2) est calculé par l'unité de simulation (7), et/ou
la pose des marchandises (3) dans l'unité de chargement cible (2) est calculée par l'unité de simulation (7), pose que les marchandises (3) présentent après avoir atteint l'état de repos suite au chargement simulé de l'unité de chargement cible (2) avec les marchandises (3).

8. Procédé selon l'une des revendications précédentes, **caractérisé en ce que** l'étape e) est répétée avec des caractéristiques de chargement modifiées (E1, E2).

9. Procédé selon l'une des revendications précédentes, **caractérisé en ce que** à l'étape b), des plages de tolérance pour les caractéristiques de chargement (E1, E2) sont en outre mises à disposition dans l'unité de simulation (7) et des valeurs pour les caractéristiques de chargement (E1, E2) sont choisies à l'intérieur des plages de tolérance données,
à l'étape d), la simulation est effectuée pour les valeurs choisies des caractéristiques de chargement (E1, E2),
à l'étape e), des valeurs pour les caractéristiques de chargement (E1, E2) sont modifiées à l'intérieur des plages de tolérance, et
l'objectif cible à l'étape f) comprend une robustesse du processus de chargement face aux variations des caractéristiques de chargement (E1, E2).

10. Procédé selon l'une des revendications précédentes, **caractérisé en ce que** à l'étape c), des plages de tolérance pour les paramètres de chargement (P1...P3) sont en outre mises à disposition dans l'unité de simulation (7) et des valeurs pour les paramètres de chargement (P1...P3) sont choisies à l'intérieur des plages de tolérance données,
à l'étape d), la simulation est effectuée pour les valeurs choisies des paramètres de chargement (P1...P3),
à l'étape e), des valeurs pour les paramètres de chargement (P1... P3) sont modifiées à l'intérieur des plages de tolérance, et
l'objectif cible à l'étape f) comprend une robustesse du processus de chargement face aux variations des paramètres de chargement (P1... P3).

11. Procédé selon l'une des revendications précédentes, **caractérisé en ce que** le chargement de l'unité de chargement cible (2) avec les marchandises (3) à l'étape h1) est détecté par une caméra (9) et, dans l'unité de simulation (7), un modèle pour la simulation du chargement est adapté de manière adaptative à un chargement réel conformément à la détection du chargement par la caméra (9).

12. Procédé selon la revendication 11, **caractérisé en ce que** les caractéristiques de chargement (E1, E2) et/ou les paramètres de chargement (P1... P3) sont adaptés conformément à la détection.

13. Procédé selon la revendication 11 ou 12, **caractérisé en ce que** le chargement de l'unité de chargement cible (2) est virtualisé à l'aide de jumeaux numériques du dispositif de chargement (4, 4a, 4b), de l'unité de chargement cible (2) et/ou des marchandises (3), et les caractéristiques de chargement (E1, E2) et/ou les paramètres de chargement (P1...P3) du dispositif de chargement virtuel (4, 4a, 4b), de l'unité de chargement cible virtuelle (2) et/ou des marchandises virtuelles (3) sont adaptés conformément à la détection du chargement par la caméra (9).

14. Système de stockage et de préparation de commandes (13a, 13b), comprenant
- une zone de stockage (12) pour la mise à disposition de marchandises (3),
- une station de chargement (1, 1a, 1b) avec un dispositif de chargement automatique (4, 4a, 4b) et un dispositif de chargement manuel (4'),
- un dispositif de convoyage source (10, 10a, 10b) pour le transport des marchandises (3), qui relie la zone de stockage (12) et la station de chargement (1, 1a, 1b),
- un ordinateur de commande (5) pour la détection (S1) d'une commande (OD) et pour la détermination des marchandises (3) associées à la commande (OD),
- au moins une base de données (6), dans laquelle des caractéristiques de chargement, comprenant des caractéristiques (E1) du dispositif de chargement (4, 4a, 4b) et des caractéristiques de marchandise (E2) des marchandises (3), peuvent être mises à disposition, et
- une unité de simulation (7), qui est connectée à l'au moins une base de données (6) par des moyens de communication de données, et qui est conçue pour le traitement (S2) de caractéristiques de chargement, comprenant des caractéristiques (E1) du dispositif de chargement (4, 4a, 4b) et des caractéristiques de marchandise (E2) des marchandises (3),
le traitement d'une définition (S3) de paramètres de chargement, comprenant au moins un paramètre (P1) concernant le dispositif de chargement (4, 4a, 4b) et/ou au moins un paramètre (P2) concernant les marchandises (3) et/ou au moins un paramètre (P3) concernant l'unité de chargement cible (2),
la simulation (S4) d'un processus de chargement de l'unité de chargement cible (2) avec des marchandises (3) sur la base des caractéristiques de chargement (E1, E2) et des paramètres de chargement (P1... P3),
la création d'un modèle de chargement,
la répétition des étapes susmentionnées avec des paramètres de chargement modifiés (P1... P3),
l'analyse (S5) des modèles de chargement créés sur la base de l'objectif cible, incluant une vérification pour savoir si au moins l'un des modèles de chargement satisfait l'objectif cible, et
la sélection (S6) du modèle de chargement qui satisfait le mieux l'objectif cible, et créer l'instruction de chargement pour le dispositif de chargement (4, 4a, 4b), comprenant les paramètres de chargement (P1... P3) qui conduisent au modèle de chargement sélectionné, si au moins l'un des modèles de chargement satisfait l'objectif cible, dans lequel le dispositif de convoyage source (10, 10a, 10b) est conçu pour acheminer (S7) les marchandises (3) vers le dispositif de chargement automatique (4, 4a, 4b) si au moins l'un des modèles de chargement satisfait l'objectif cible, et pour acheminer (S7) les marchandises (3) vers le dispositif de chargement manuel (4') si aucun des modèles de chargement ne satisfait l'objectif cible, et
dans lequel la station de chargement (1, 1a, 1b) est conçue pour charger l'unité de chargement cible (2) avec les marchandises (3) par le dispositif de chargement automatique (4, 4a, 4b) conformément à l'instruction de chargement si au moins l'un des modèles de chargement satisfait l'objectif cible, et pour charger l'unité de chargement cible (2) avec les marchandises (3) par l'opérateur (16) au dispositif de chargement manuel (4') si aucun des modèles de chargement ne satisfait l'objectif cible.

15. Système de stockage et de préparation de commandes (13a, 13b) selon la revendication 14, **caractérisé en ce que** la zone de stockage (12) comprend une pluralité d'étagères de stockage fixes et au moins un transstockeur à fonctionnement automatisé pour le stockage des marchandises (3) dans les étagères de stockage et/ou le déstockage des marchandises (3) des étagères de stockage.

16. Système de stockage et de préparation de commandes (13a, 13b) selon la revendication 14 ou 15, **caractérisé en ce que** le dispositif de convoyage source (10, 10a, 10b) et/ou un dispositif de convoyage cible (11) sont conçus comme un dispositif de convoyage stationnaire ou mobile.

17. Système de stockage et de préparation de commandes (13a, 13b) selon l'une des revendications 14 à 16, **caractérisé en ce que**
le dispositif de convoyage source (10, 10a, 10b) est conçu pour le transport couché ou suspendu des marchandises (3) ou d'unités de chargement source (14) avec des marchandises (3), et/ou
le dispositif de convoyage cible (11) est conçu pour le transport couché ou suspendu des marchandises (3) ou d'unités de chargement cible (2) avec des marchandises (3).
